(19) **Europäisches Patentamt**
**European Patent Office**
**Office européen des brevets**

(11) **EP 1 087 232 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
***G01P 3/489*** *(2006.01)*

(21) Anmeldenummer: **00115977.1**

(22) Anmeldetag: **26.07.2000**

(54) **Verfahren zur Messung einer Frequenzinformation, insbesondere einer Drehzahlinformation bei einem Motors, und Vorrichtung zur Durchführung eines solchen Verfahrens**

Method for measuring a frequency information, in particular an angular frequency information of a motor, and device for implementing such a method

Procédé pour la mesure d'une information fréquentielle, en particulier l'information de vitesse de rotation, et dispositif pour l'exécution d'un tel procédé

(84) Benannte Vertragsstaaten:
**AT BE CH CY DE DK ES FI FR GB GR IE IT LI LU MC NL PT SE**

(30) Priorität: **22.09.1999 DE 19945313**

(43) Veröffentlichungstag der Anmeldung:
**28.03.2001 Patentblatt 2001/13**

(73) Patentinhaber: **ebm-papst St. Georgen GmbH & Co. KG**
**78112 St. Georgen (DE)**

(72) Erfinder:
• **Dieterle, Roland**
**79588 Efringen-Kirchen (DE)**
• **Rappenecker, Hermann, Dipl.-Ing.**
**78147 Vöhrenbach (DE)**
• **Hahn, Alexander**
**78253 Eigeltingen-Heudorf (DE)**

(74) Vertreter: **Raible, Hans**
**Schoderstrasse 10**
**70192 Stuttgart (DE)**

(56) Entgegenhaltungen:
GB-A- 2 192 103        US-A- 4 584 528
US-A- 5 237 521        US-A- 5 502 376

## Beschreibung

Die Erfindung betrifft ein Verfahren zur Messung einer Frequenzinformation, insbesondere einer Drehzahlinformation bei einem Motor, und eine Vorrichtung zur Durchführung eines solchen Verfahrens.

Digitale Systeme zur Erfassung der Drehzahl eines rotierenden Objekts ("Rotor") beruhen darauf, dass ein solcher Rotor pro Umdrehung eines oder mehrere Signale erzeugt, z.B. Nadelimpulse, Impulsflanken, oder dgl. Diese Signale werden nachfolgend auch als "Ereignisse" bezeichnet. Die Erfassung einer Drehzahlinformation beruht darauf, dass der zeitliche Abstand zwischen derartigen "Ereignissen" gemessen wird, oder dass gezählt wird, wie viele solche "Ereignisse" pro Zeiteinheit auftreten.

Die US 4,584,528 A beschreibt ein Verfahren zur Bestimmung der Drehzahl eines Motors, bei dem eine Drehzahlinformation aus einem Impuls eines Pulsgenerators abgeleitet wird. Dieser Impuls wird bei jedem Bruchteil 1/n einer vollständigen Umdrehung des Motors erzeugt, wobei n eine große Ganzzahl ist, sodass bei jeder vollständigen Umdrehung des Motors eine große Anzahl n von Impulsen erzeugt wird. Zur Bestimmung der Drehzahl wird die Anzahl der in einem vorgegebenen Zeitintervall erzeugten Impulse ermittelt. Für den Fall, dass die Messung jeweils vor einem erzeugten Impuls ausgelöst bzw. beendet wird, d.h. dass das vorgegebene Zeitintervall vor einem ersten erzeugten Impuls beginnt und vor oder nach einem zweiten erzeugten Impuls endet, werden entsprechende Zeitkompensationsfaktoren ermittelt, mit denen eine Zeitspanne zwischen erstem und zweitem Impuls zur Bestimmung der Drehzahl berechnet werden kann. Somit kann die jeweilige Drehzahl aus der berechneten Zeitspanne und der Anzahl der in dieser Zeitspanne erzeugten Impulse bestimmt werden.

Die GB 2 192 103 A beschreibt eine Vorrichtung zur Messung der Frequenz einer Impulsfolge. Dabei startet die Messung bei einem ersten Impuls, und es wird die Anzahl der Impulse gemessen, die bis zum auf eine vorgegebene Zeitdauer nachfolgenden Impuls auftreten.

Es ist eine Aufgabe der Erfindung, ein neues Verfahren zur Messung einer Frequenzinformation, insbesondere einer Drehzahlinformation bei einem Motor, und eine Vorrichtung zur Durchführung eines solchen Verfahrens, bereitzustellen.

Nach einem ersten Aspekt der Erfindung wird diese Aufgabe gelöst durch ein Verfahren gemäß Anspruch 1. Man erreicht so, dass die Messung der Drehzahlinformation etwa beim ersten, vorgegebenen Zeitpunkt beginnt, und es wird durch den ersten, vorgegebenen Zeitpunkt und den dritten, vorgegebenen Zeitpunkt eine ungefähre Messdauer vorgegeben. Diese ungefähre Messdauer wird nicht durch die Umdrehungsgeschwindigkeit des Rotors beeinflusst. Der Start der Berechnung der Drehzahlinformation, welche Berechnung nach Ablauf der Messung erfolgen kann, ist damit auch in etwa zeitlich bestimmt. Hierdurch wird ein z.B. vorhandener Mikroprozessor oder Mikrocontroller (im folgenden: μC) bei allen Drehzahlen gleichmäßig belastet, so dass auch für andere Aufgaben, z.B. die Regelung der Drehzahl, immer genügend Rechenleistung zur Verfügung steht.

Dadurch, dass bei einer Messung die "Ereignisse" während einer vollen Rotordrehung, oder einer Mehrzahl von vollen Rotordrehungen, erfasst werden, findet eine Mittelwertbildung bei der Messung der Drehzahlinformation statt. Wird die Drehzahl nämlich durch eine Mehrzahl kurzer Messungen ermittelt, z.B. durch Messung während eines Teils einer Umdrehung, so muss man meist aus mehreren Messwerten durch Rechnung einen gleitenden Mittelwert (moving average) bilden. Dagegen erhält man durch die Erfindung ohne zusätzliche Rechnung einen Mittelwert, wodurch z.B. ein μC zusätzlich entlastet wird. Und trotz der ungefähren Vorgabe einer Messdauer durch die vorgegebenen Zeitpunkte findet bei dem Verfahren die eigentliche Messung genau zwischen zwei Ereignissen des Sensorsignals statt, welche derselben Drehstellung des Rotors zugeordnet sind, d.h. die Drehzahlinformation wird während voller Umdrehungen gemessen. Dies ist besonders bei Rotoren interessant, welche zur Erzeugung des Sensorsignals mehrere Marken aufweisen, die differierende Winkelabstände haben. Bei einer vorgegebenen Messung wird also an der gleichen Marke gemessen, also an derselben Drehstellung des Rotors, so dass etwaige Unterschiede der Winkelabstände keine Rolle spielen. Hierdurch ergibt sich eine hohe Genauigkeit der Drehzahlmessung.

Eine andere vorteilhafte Weiterbildung der Erfindung ist Gegenstand des Anspruchs 5. Durch ein solches Verfahren wird kontinuierlich eine Drehzahlinformation gemessen, denn die folgende Messung schließt sich ohne Lücken an die momentane Messung an. In der Nähe eines jeden vorgegebenen Zeitpunkts wird eine momentane Messung beendet und eine neue Messung begonnen. Wenn die vorgegebenen Zeitpunkte jeweils nach einer Zeit T_A auftreten, so findet im Mittel jeweils nach der Zeit T_A eine Messung statt. Die Verarbeitung der Messung, z.B. in einem μC, kann somit in regelmäßigen Abständen stattfinden, welche unabhängig von der Drehzahl sind. Hierdurch wird der μC bei allen Drehzahlen gleichmäßig beansprucht, so dass genügend Rechenzeit für andere Aufgaben übrig bleibt, z.B. für die Kommutierung eines elektronisch kommutierten Motors oder eine Drehzahlregelung.

Da in diesem Fall keine Pause zwischen den einzelnen Messungen liegt, ist dieses Verfahren besonders gut geeignet, wenn für die Messung jede einzelne Umdrehung des Rotors berücksichtigt werden muss, wie das z.B. bei Motoren mit hochgenauen Reglern oder bei Schrittmotoren notwendig ist.

Die Erfindung betrifft ferner ein Verfahren gemäß Anspruch 11. Durch die erfindungsgemäße Berücksichtigung des Rests bei der nachfolgenden Messung wird bei einer Berechnung der Drehzahlinformation mittels Division bewirkt, dass durch Rundung keine Drehzahlinformation verlorengeht. Dies führt in sehr vorteilhafter Weise zu einer Erhöhung der Genauigkeit der Messung und ist von großem Vorteil bei komplizierten Regelvorgängen, die hohe Präzision erfordern.

Dabei hat sich die Weiterbildung gemäß Anspruch 12 als außerordentlich vorteilhaft erwiesen, weil ein solches Verfahren besonders tolerant gegen Störimpulse ist. Ein Störimpuls bewirkt zwar bei der augenblicklichen Messung einen Fehler, aber die nachfolgenden Messungen sind wieder korrekt, verwenden jedoch für die Erfassung der Messdauer eine andere Rotorstellung als bisher.

Durch eine Vorrichtung gemäß Anspruch 13 ergibt sich ebenfalls eine Lösung der gestellten Aufgabe. Die Vorteile entsprechen den weiter oben zu Anspruch 1 genannten Vorteilen.

Die bevorzugte Verwendung eines Ringzählers gemäß Anspruch 17 hat den Vorteil, dass der Stopp der einen Messung und der Start der nachfolgenden Messung gleichzeitig sind, weil der Ringzähler ständig läuft, so dass keine Fehler durch eine Messverzögerung auftreten können und sich etwaige Verzögerungen, z.B. durch gleichzeitiges Auftreten von zwei Interrupts, nachfolgend automatisch ausgleichen. Dies ermöglicht eine lückenlose Erfassung der Drehzahl und einen mittleren Fehler der Drehzahlerfassung, der bei Null liegt, da bei der Messung kein Bit verlorengeht.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den übrigen Unteransprüchen. Es zeigt:

Fig. 1    eine Prinzipdarstellung einer erfindungsgemäßen Messung für einen Rotor mit einer einzigen Marke 80,

Fig. 2    eine schematische Darstellung einer Drehzahlberechnungsfunktion,

Fig. 3    eine Prinzipdarstellung einer erfindungsgemäßen Messung für einen Rotor mit zwei Marken 81 und 82,

Fig. 4    die Pinbelegung eines beim Ausführungsbeispiel verwendeten µC, nämlich des Typs PIC 16C72 von Microchip,

Fig. 5    ein Schaltbild, welches Bauteile einer erfindungsgemäßen Anordnung zeigt,

Fig. 6    eine Istfrequenz f vor und nach der Signalbearbeitung,

Fig. 7    ein Flussdiagramm mit einer Übersicht über das Gesamtprogramm,

Fig. 8    ein Funktionsregister,

Fig. 9    ein Zustandsdiagramm für ein erfindungsgemäßes Messverfahren,

Fig. 10   eine Prinzipdarstellung einer Messung gemäß Fig. 9 für einen Rotor mit vier Marken,

Fig. 11   ein Flussdiagramm für eine Funktion TIMER0-Interrupt,

Fig. 12   ein Flussdiagramm für eine Funktion Hall-Interrupt,

Fig. 13   ein Flussdiagramm für eine Funktion CALC_n zur Berechnung der Drehzahl,

Fig. 14   ein Flussdiagramm für eine Funktion RGL zur Regelung der Drehzahl, und

Fig. 15   eine Prinzipdarstellung einer Messung analog zu Fig. 3, bei welcher ein Störsignal S auftritt, zur Erläuterung des hierbei auftretenden Vorgänge.

Gleiche oder gleich wirkende Teile werden nachfolgend mit denselben Bezugszeichen bezeichnet und gewöhnlich nur einmal beschrieben.

**Prinzip der Messung**

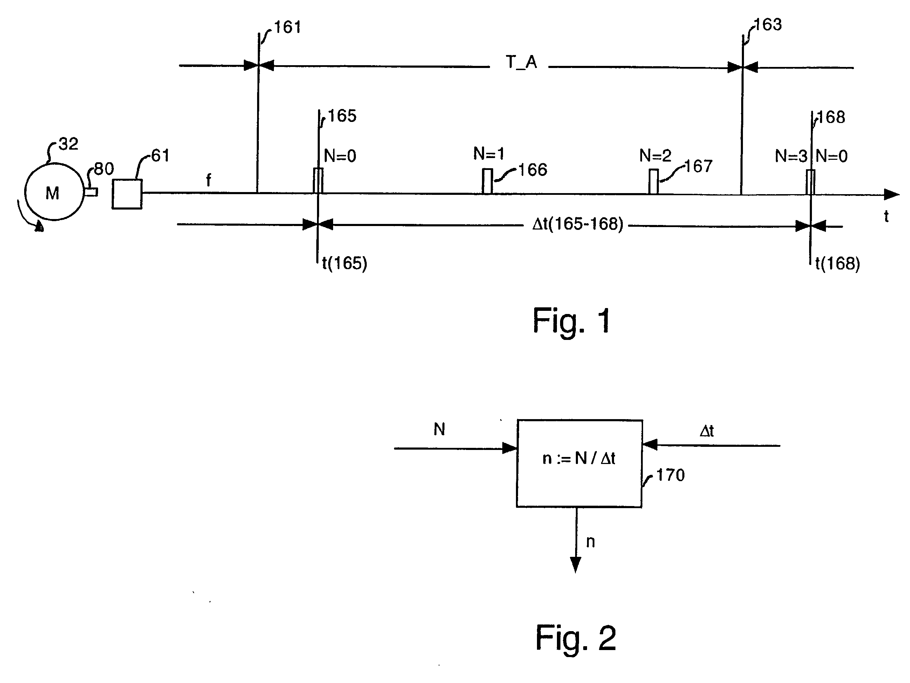

**Fig. 1** zeigt einen Rotor 32 mit einer Marke 80, und einen Sensor 61 für die Marke 80, der als Rotorstellungssensor dient. Der Rotor 32 ist gewöhnlich Teil eines Motors M. Sofern es sich um einen elektronisch kommutierten Motor (ECM) handelt, hat dieser gewöhnlich einen Rotorstellungssensor 61, der dann auch für die vorliegende Erfindung verwendet werden kann. Die Marke 80 ist nur symbolisch und nur zu didaktischen Zwecken dargestellt und kann z.B.

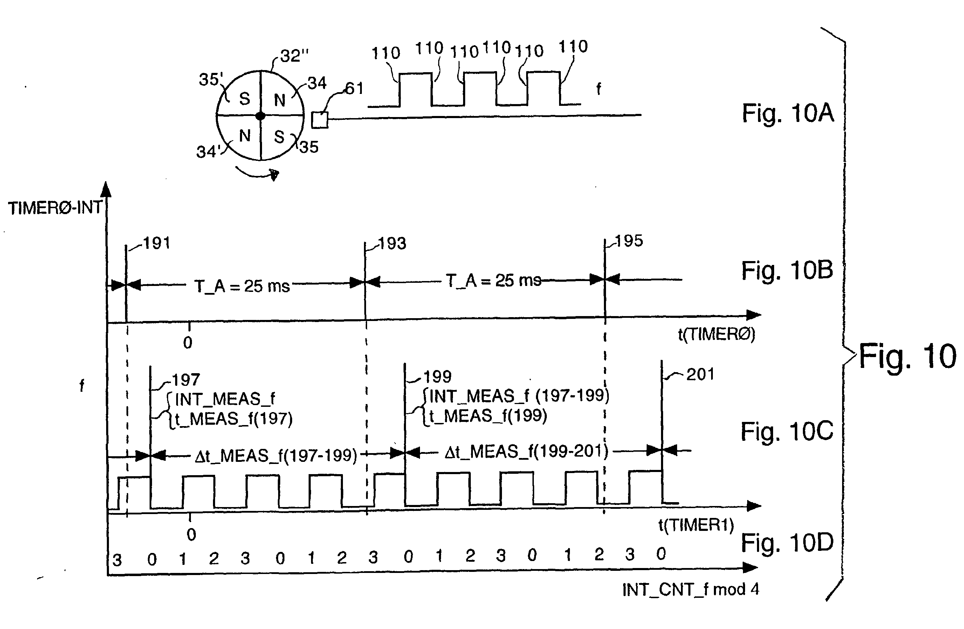

eine bestimmte magnetische Markierung des Rotors 32 sein, die durch einen Hallsensor erfasst wird. In diesem Fall ist die Marke 80 für das Auge nicht sichtbar. Die Marke 80 könnte aber z.B. auch eine optische Markierung sein, oder ein Nocken, der einen mechanischen Schalter betätigt. In einem Elektromotor werden meistens magnetische Markierungen verwendet, vgl. den Rotor 32" in Fig. 10.

Der Sensor 61 detektiert mit Hilfe der Marke 80 ein Sensorsignal f. Dieses weist Impulse an den Stellen 165, 166, 167, 168 etc. auf, wobei zwischen jeweils zwei Impulsen eine Umdrehung des Rotors 32 stattgefunden hat. Die Zeitachse ist mit t bezeichnet. Diese Impulse stellen "Ereignisse" (events) bei der Drehung des Rotors 32 dar. Bei Fig. 1 wird pro voller Rotorumdrehung 1 Ereignis erzeugt, nämlich 1 Impuls.

Mit Hilfe des Rotorstellungssignals f wird wie folgt die Drehzahl des Rotors 32 gemessen. In regelmäßigen Abständen T_A wird ein Startsignal 161, 163 etc. erzeugt, mit dem jeweils eine neue Messung angefordert wird.

Auf das Startsignal an der Stelle 161 folgt der Impuls 165, und auf das Startsignal an der Stelle 163 der Impuls 168. Die Messung geschieht zwischen den Stellen 165 und 168. Gemessen werden die Anzahl N der Impulse des Rotorstellungssignals f, welche nach 165 bis einschließlich 168 auftreten, also hier N = 3, und die für diese Impulse benötigte Zeit $\Delta t$(165-168). Hieraus lässt sich die Frequenz des Rotorstellungssignals f und damit die Drehzahl des Rotors 32 bestimmen. An den Stellen 165, 168 der Messung wird jeweils eine alte Messung beendet und eine neue Messung gestartet. Man geht also hier so vor, dass bei dem auf das Startsignal 161, 163 folgenden Impuls eine alte Messung beendet und simultan eine neue Messung begonnen wird.

Die Anzahl N der Impulse kann z.B. gemessen werden, indem der Wert N am Ende jeder Messung auf Null zurückgesetzt wird und anschließend der Wert N bei jedem Impuls um 1 erhöht wird. Der Impuls 165 hat also die Ordnungszahl N=0, der Impuls 166 die Ordnungszahl N=1, etc.

Die Zeit $\Delta t$ kann z.B. gemessen werden, indem die Differenz zwischen der Zeit des Starts der Messung, z.B. t(165) an der Stelle 165, und der Zeit des Endes der Messung, z.B. t(168) an der Stelle 168, gebildet wird.

Beträgt z.B. t(165) = 17,7 ms und

t(168) = 87,7 ms,

so ist

$\Delta t$(165-168) = 87,7 ms - 17,7 ms = 70 ms.

Durch die Startsignale 161, 163, welche in festen Abständen T_A auftreten, wird ein Messfenster verwirklicht. Die Messungen finden jedoch nicht genau in diesem Messfenster statt, sondern gemessen wird an einer geeigneten, auf das jeweilige Startsignal folgenden Stelle, an der ein Impuls ("Ereignis") des Rotorstellungssignals f auftritt. Bei einer Messung zum Zeitpunkt des jeweiligen Startsignals würden der Anfang und das Ende der Messung in der überwiegenden Anzahl der Fälle an irgendeiner Stelle zwischen zwei Impulsen des Sensorsignals f stattfinden. Dies würde zu einer Ungenauigkeit in der Messung führen. Wird jedoch bis zu dem nächsten Impuls gewartet, so werden volle Perioden zwischen den Impulsen gemessen, was zu einer starken Erhöhung der Genauigkeit der Messung führt.

**Fig. 2** zeigt schematisch eine Berechnung der Drehzahl n in einer Drehzahlberechnungsfunktion 170. Die Funktion 170 bekommt in zeitlichen Abständen, welche im Mittel die Dauer T_A haben, als Eingabe die Anzahl N der Impulse und die für diese Anzahl N benötigte Zeit $\Delta t$. Hieraus berechnet die Funktion 170 eine Drehzahlinformation n als Quotient aus der Anzahl N und der Zeit $\Delta t$

$$n = N / \Delta t \qquad\qquad\qquad (1)$$

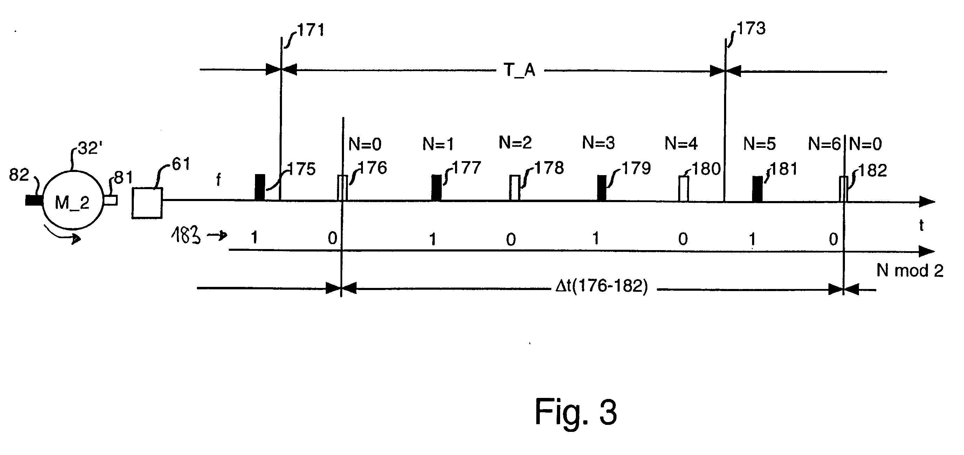

**Fig. 3** zeigt den Rotor 32' (eines Motors M_2) mit zwei Marken 81 und 82 und dem Rotorstellungssensor 61. Die Marken 81 und 82 sind ungefähr 180° mech. versetzt.

Der Rotorstellungssensor 61 detektiert mit Hilfe der Marken 81 und 82 ein Rotorstellungssignal f. Das Rotorstellungssignal f weist aufgrund der Marke 81 Impulse (weiss gefüllt dargestellt) an den Stellen 176, 178, 180, 182 etc. und aufgrund der Marke 82 Impulse (schwarz gefüllt dargestellt) an den Stellen 175, 177, 179, 181 etc. auf. Zwischen jeweils zwei "weissen" Impulsen bzw. zwischen jeweils zwei "schwarzen" Impulsen findet eine volle Umdrehung des Rotors 32' statt.

Da die Impulse der Marken 81 und 82 nicht unterschieden werden können, kann allgemeiner gesagt werden, dass zwischen jedem Impuls und dem übernächsten Impuls, z.B. zwischen N = 1 und N = 3, eine Umdrehung des Rotors 32' stattfindet.

Der Messung der Drehzahl n des Rotors 32' liegen folgende Überlegungen zugrunde:

Die Marken 81, 82 können niemals vollkommen symmetrisch angeordnet werden. Es ist z.B. möglich, dass die Marke 82 um wenige Grade von der symmetrischen Position bei 180° mech. von der Marke 81, welche bei 0° mech. liegt, abweicht, also z.B. bei 183° mech. positioniert ist. Hierdurch käme es bei einer Messung, welche z.B. an der Stelle 176 (Marke 81) startet und bei der Stelle 181 (Marke 82) endet, zu einem Messfehler, da der gemessene Winkelbereich nicht genau ein Vielfaches von 180° mech. wäre.

Um dieses Problem zu beseitigen, werden in Fig. 3 jeweils nur volle Umdrehungen gemessen, d.h. es wird immer zwischen der gleichen Art von Marke gemessen, und damit wird immer genau ein Vielfaches von 360° mech. gemessen. Die Messung, die bei 176 beginnt, nämlich nach einem Startimpuls 171, endet daher nicht an der Stelle 181, sondern an der Stelle 182, welche die nächste auf einen Startimpuls 173 folgende Stelle ist, an der, von dem Start der Messung an der Stelle 176 aus betrachtet, eine volle Umdrehung stattgefunden hat.

Diese Bedingung kann mathematisch mit der Funktion MODULO (mod) beschrieben werden, wobei z.B.

$$N \bmod 2 = 0 \qquad\qquad (2)$$

bedeutet, dass bei einer Division des Wertes N durch 2 der Rest 0 übrigbleibt. So ist z.B. 0 mod 2 = 0, 1 mod 2 = 1, 2 mod 2 = 0, 3 mod 2 = 1 usw.

In Fig. 3 ist bei 183 der Wert N mod 2 unter den Impulsen 175 bis 182 eingetragen, und eine Messung endet/ startet z.B. nur, wenn durch ein Startsignal 171, 173 eine Messung angefordert ist und zusätzlich die Bedingung N mod 2 = 0 erfüllt ist.

Allgemeiner gesagt, sollte der Wert von N mod 2 bei Start und Stopp der Messung derselbe sein.

Hat ein Rotor eine Zahl von A Markern, so lautet die Bedingung der Gleichung (2) allgemein

N mod A=0

bzw.

$$N \bmod A = const. \qquad\qquad (3)$$

Im folgenden wird die Grösse A mit MOD_f bezeichnet, und Gleichung (3) lautet dann

N mod MOD_f = 0

bzw.

$$N \bmod MOD\_f = const \qquad\qquad (3a)$$

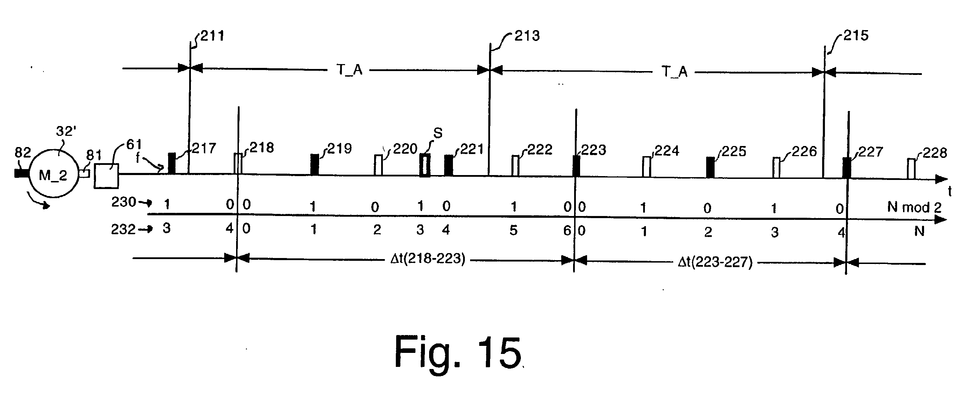

Die Wahl des ersten Markers kann dabei entweder durch ein besonderes Signal erfolgen, oder es kann z.B. willkürlich das erste gemessene Ereignis (hier: 176) als Ereignis mit der Ordnungszahl N = 0 gewählt werden. Aus der Erläuterung zu Fig. 15 wird dies noch deutlicher werden.

Die Messung erfolgt also bei Fig. 3 entweder, wie dargestellt, zwischen "weissen" Impulsen, oder, wie in Fig. 15 rechts dargestellt, zwischen "schwarzen" Impulsen. Beim Beispiel der Fig. 3 erfolgt die Messung zwischen den Impulsen 176 und 182. Dort werden N = 6 Impulse gezählt, und der zeitliche Abstand zwischen den Impulsen 176 und 182 wird ermittelt und beträgt $\Delta t(176\text{-}182)$. Aus diesen beiden Werten wird dann gemäss Gleichung (1) eine Drehzahlinformation n errechnet.

Es sei nochmals hervorgehoben, dass es in der Realität keine "weissen" oder "schwarzen" Impulse gibt, sondern dass dies ein didaktisches Hilfsmittel zur Erläuterung der Erfindung ist.

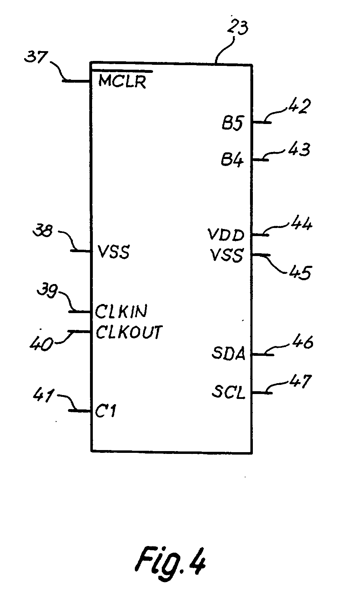

**Fig. 4** zeigt eine Übersicht über die beim Ausführungsbeispiel verwendeten Anschlüsse eines µC 23, hier vom Typ PIC 16C72 der Firma Microchip. Dies ist ein 8 Bit-Prozessor. Er enthält einen 16 Bit-Timer und einen 8 Bit-Timer, zwei PWM-Register, und mehrere Interruptfunktionen. Naturgemäss stellt dieser Prozessor nur ein Beispiel dar, hat sich aber bei der beschriebenen Ausführungsform bewährt.

Der µC 23 weist u.a. die Anschlüsse MCLR 37, VSS 38, CLKIN 39, CLKOUT 40, C1 41, B5 42, B4 43, VDD 44, VSS 45, SDA 46 und SCL 47 auf.

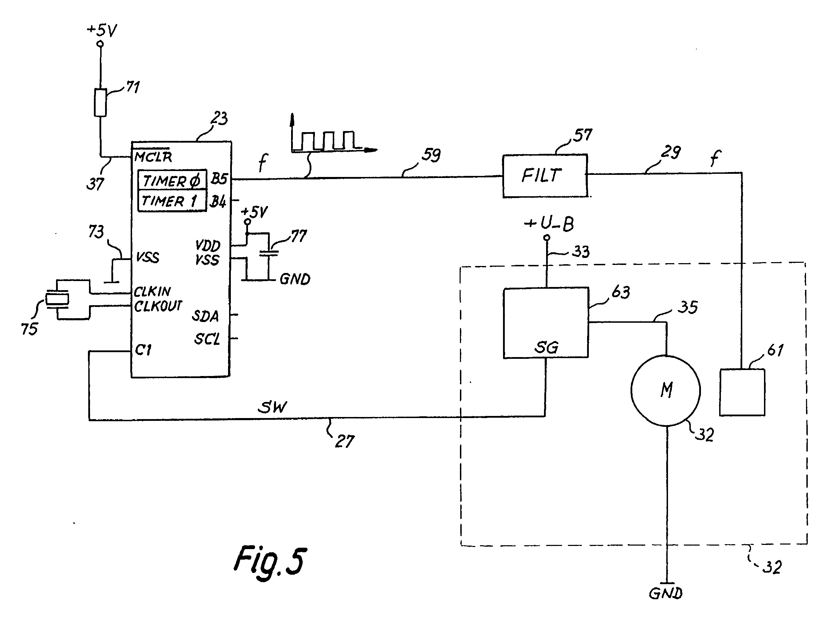

**Fig. 5** zeigt ein Schaltbild einer bevorzugten Anordnung mit einem Elektromotor M, dessen Drehzahl geregelt werden soll.

Die Anschlüsse des µC 23 sind in Fig. 4 dargestellt, und die entsprechenden Bezugszeichen werden weiter verwendet. Der Anschluss MCLR 37 ist über einen Widerstand 71 an einer Plus-Spannung + 5 V angeschlossen. Die Anschlüsse CLKIN 39 und CLKOUT 40 sind mit einem Oszillatorquarz 75 verbunden, der die Taktfrequenz für den µC 23 erzeugt. Der Anschluss VDD 44 ist an + 5 V angeschlossen, der Anschluss VSS 45 an Masse GND, und zwischen beiden Anschlüsse liegt ein Kondensator 77. Der µC 23 weist zwei Timer TIMER0 und TIMER1 auf, sowie einen Zähler für die nachfolgend beschriebenen Variable INT_CNT_f. Gleiche oder gleich wirkende Teile wie in den Fig. 1 bis 4 erhalten dieselben Bezugszeichen.

Die durch den Rotorstellungssensor 61 detektierte Frequenz f (entsprechend der Drehzahl des Motors M 32) gelangt über eine Leitung 29 an ein Filter FILT 57, und von dort über die Leitung 59 an den Anschluss B5 42 des µC 23.

Der Motor 32 weist ein Stellglied SG 63 auf, welches die Größe des durch den Motor 32 fließenden Stromes beeinflusst.

Das Stellglied 63 ist über eine Leitung 33 an einer Spannung + U_B angeschlossen, und ein Stellwert SW wird dem Stellglied SG 63 über eine Leitung 27 von dem Anschluss C1 des µC 23 zugeführt. um die Grösse des Stromes zu beeinflussen, der über SG63 zum Motor M fließt.

**Arbeitsweise**

Der µC 23 erhält seine Betriebsspannung über den Anschluss VDD 44 an + 5 V und VSS 45 an Masse GND. Über einen Siebkondensator 77 wird die Versorgungsspannung gegen Spannungsspitzen und -einbrüche gesichert. Die Anschlüsse SDA 46 und SCL 47 des µC 23 dienen zur seriellen Übertragung von Daten und können z.B. mit einem EEPROM oder einem externen Bus verbunden sein (nicht dargestellt).

Die Frequenz f wird von dem Rotorstellungssensor 61 geliefert, welcher eine konstante Anzahl von Impulsen pro Umdrehung des Rotors 32 liefert. Als Rotorstellungssensor 61 kann z.B. ein Hallgenerator oder ein optischer, mechanischer, kapazitiver oder induktiver Sensor verwendet werden.

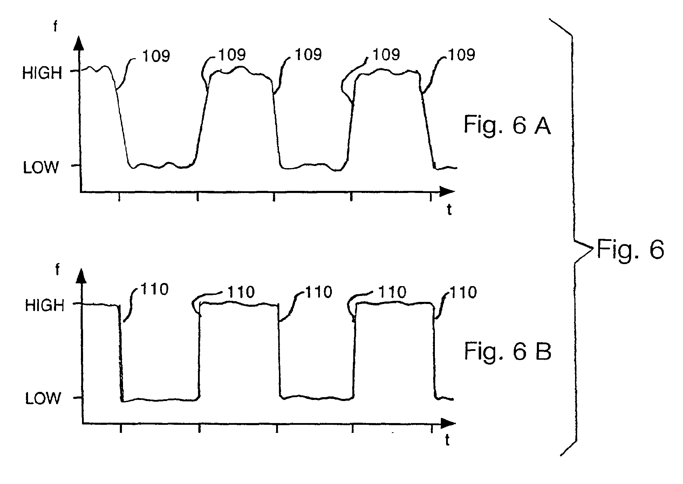

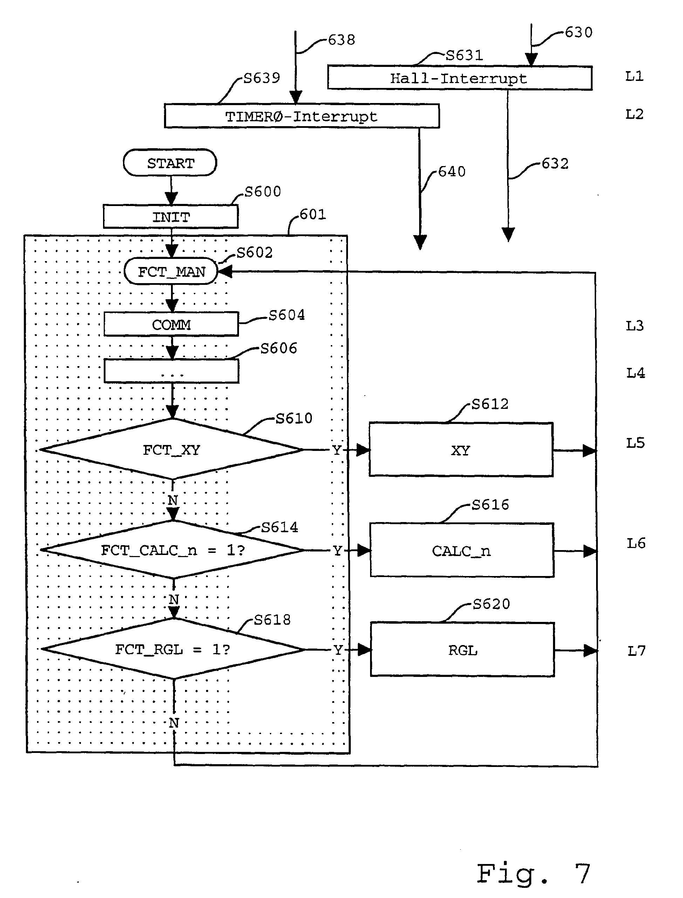

Das Filter 57 dient zur Aufbereitung der Flanken der Frequenz f, so dass bei einem Flankenwechsel an dem interruptfähigen Eingang B5 42 sicher ein Hall-Interrupt 630 (Fig. 7) ausgelöst wird. Das Filter 57 kann z.B. ein RC-Glied oder ein Schmitt-Trigger sein. Bei einem geeigneten Signal f vom Sensor 61 kann das Filter FILT 57 auch entfallen. Ein Beispiel für die Wirkung des Filters ist in Fig. 6 gezeigt.

TIMER0 des µC 23 wird zur Auslösung der Startsignale 171, 173 (Fig. 3) der Messungen verwendet, indem er an den entsprechenden Stellen 171, 173 etc. einen TIMER0-Interrupt 638 (Fig. 7) auslöst.

TIMER1 des µC 23 wird zur Bestimmung der Zeitdifferenz $\Delta t$ (Fig. 3) verwendet. Der TIMER1 ist bevorzugt als Ringzähler ausgebildet. Das hat den Vorteil, dass der Ringzähler durchgehend mitläuft und bei einer Messung kein Bit verlorengeht. Man erhält so eine Drehzahlerfassung mit einer sehr hohen Auflösung, die im Mittel mit einem Messfehler Null arbeitet. Der Wert des TIMER1 wird bei jedem Interrupt ausgelesen und gespeichert. Sollten einmal zwei Interrupts gleichzeitig auftreten, so kann zwar eine geringe Messverzögerung auftreten, doch wird diese im folgenden Messzyklus automatisch korrigiert, weil dieser dann automatisch etwas zu kurz wird, denn der Stopp der einen Messung ist identisch mit dem Start der nachfolgenden Messung, und die nachfolgende Messung wird begonnen, bevor die aktuellen Messwerte ausgewertet werden.

Ein in dem µC 23 berechneter Stellwert SW für die Drehzahlregelung wird über den Anschluss C1 41 z.B. als analoge Spannung SW ausgegeben und über die Leitung 27 dem Stellglied SG 63 zugeführt, welches die Stromzufuhr für den Motor M 32 steuert. Das Stellglied SG 63 kann z.B. als analoger Längssteller oder als PWM-Stellglied ausgeführt sein.

**Fig. 6A** zeigt die Frequenz f, bevor sie in das Filter FILT 57 gelangt, und

**Fig. 6B** zeigt die Frequenz f, nachdem sie in dem Filter FILT 57 aufbereitet wurde. Die Frequenz f aus Fig. 6A stammt z.B. von einem Hallgenerator, und die Flanken 109 sind weniger steil.

Die Frequenz f aus Fig. 6B ist durch das Filter 57 aufbereitet worden. Die Flanken 110 sind steil, und es kann sicher durch jede der steilen Flanken 110 im µC 23 ein Interrupt 630 (Fig. 7) ausgelöst werden, welcher im folgenden Hall-Interrupt genannt wird. Die Hall-Interrupts entsprechen hier den Impulsen 165 bis 168 der Fig. 1 und 175 bis 182 der Fig. 3.

**Allgemeiner Aufbau des Gesamtprogramms, Funktionsmanager**

Im folgenden wird die Architektur des in dem µC 23 ablaufenden Gesamtprogramms beschrieben. Daraufhin werden die einzelnen Unterprogramme im einzelnen beschrieben.

**Fig. 7** zeigt ein Flussdiagramm mit einer möglichen Ausführungsform des in dem µC 23 ablaufenden Gesamtprogramms.

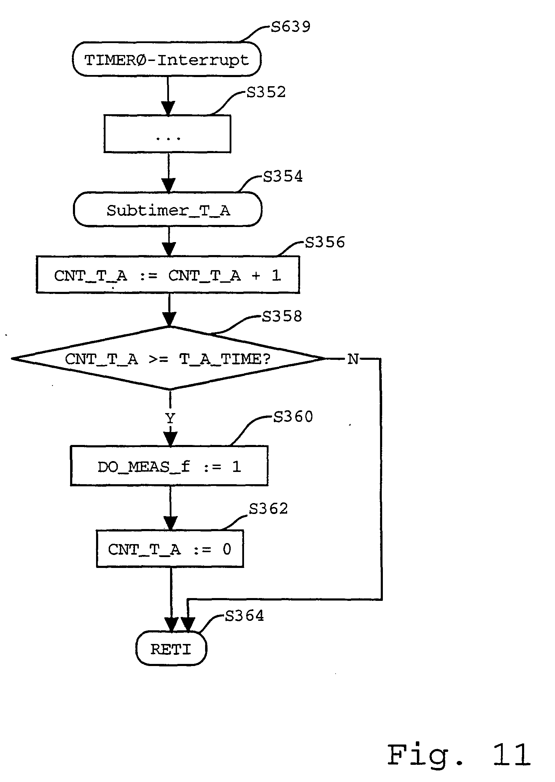

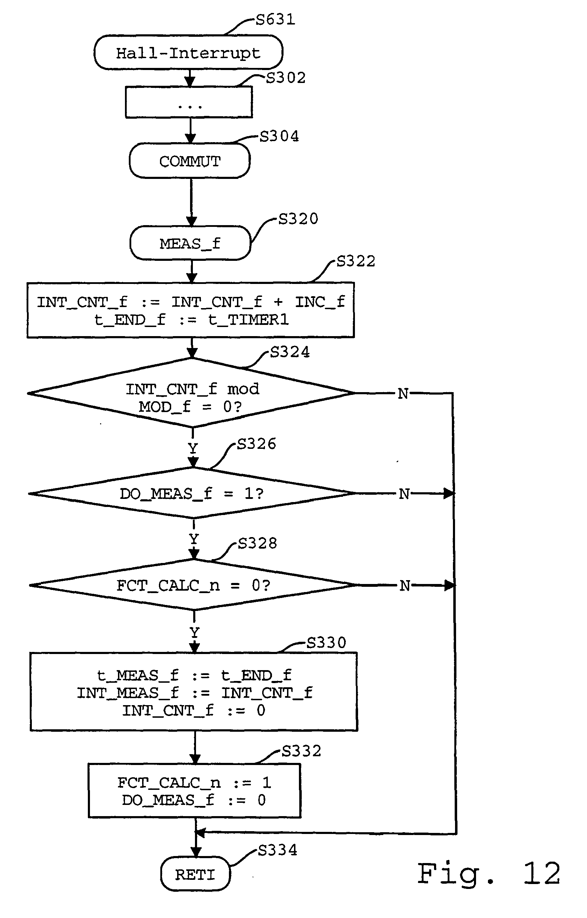

Ganz oben stehen zwei Interruptroutinen Hall-Interrupt S631 (Fig. 12) und TIMER0-Interrupt S639 (Fig. 11), welche beim Auftreten des jeweiligen Interrupts 630 bzw 638 ausgeführt werden und welche über 632, 640 auf das Hauptprogramm einwirken. Dabei nimmt die Priorität, also die Reihenfolge, in der die einzelnen Programmteile ausgeführt werden, von oben nach unten ab. Die Prioritäten sind deshalb auf der rechten Seite mit L1 bis L7 bezeichnet, wobei eine kleinere Zahl eine höhere Priorität bedeutet. L1 hat also die höchste Priorität.

Unter den Interruptroutinen beginnt das Hauptprogramm. Nach dem Einschalten des Motors M wird in dem µC 23 ein interner Reset ausgelöst. In S600 erfolgt die Initialisierung des µC 23.

Nach der Initialisierung erfolgt ein Sprung in einen sogenannten Funktionsmanager 601, der in S602 beginnt. Der Funktionsmanager FCT_MAN regelt den Ablauf der einzelnen Unterprogramme.

Als erstes werden die Funktionen abgearbeitet, die zeitkritisch sind und bei jedem Durchlauf ausgeführt werden müssen. Hierzu zählt z.B. eine Kommunikationsfunktion COMM in S604, welche die Datenübertragung zwischen dem μC 23 und einem (nicht dargestellten) EEPROM oder Bus (Datenleitung) durchführt. S606 steht für evtl. vorhandene weitere zeitkritische Funktionen.

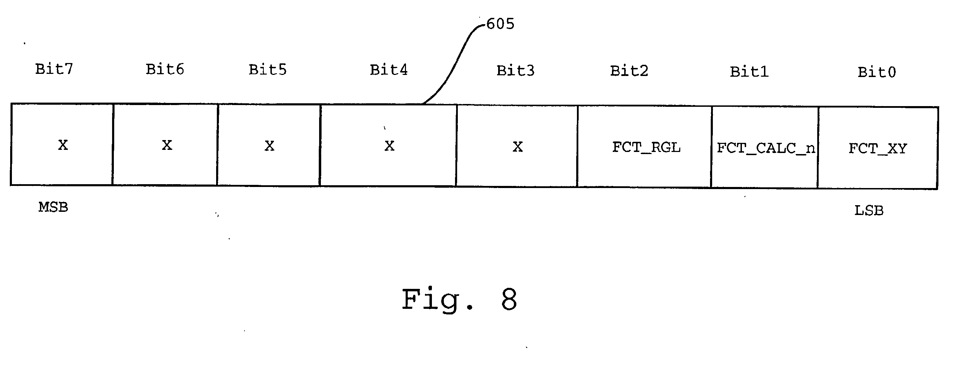

**Fig. 8** zeigt ein beispielhaftes Funktionsregister 605, in dem für jede Funktion der Fig. 7 ein Bit reserviert ist.

In diesem Ausführungsbeispiel ist das Funktionregister 605 1 Byte groß, und es sind, von dem niederwertigsten Bit (LSB) beginnend, die folgenden Anforderungsbits für die unten erklärten anforderbaren Funktionen definiert:

- FCT_XY für eine beliebige Funktion S612,
- FCT_CALC_n für eine Drehzahlberechnungsfunktion CALC_n S616,
- FCT_RGL für eine Reglerfunktion RGL S620.

Die restlichen Bits Bit 3 bis Bit 7 sind für weitere anforderbare Funktionen reserviert, die gegebenenfalls in den Funktionsmanager 601 integriert werden können.

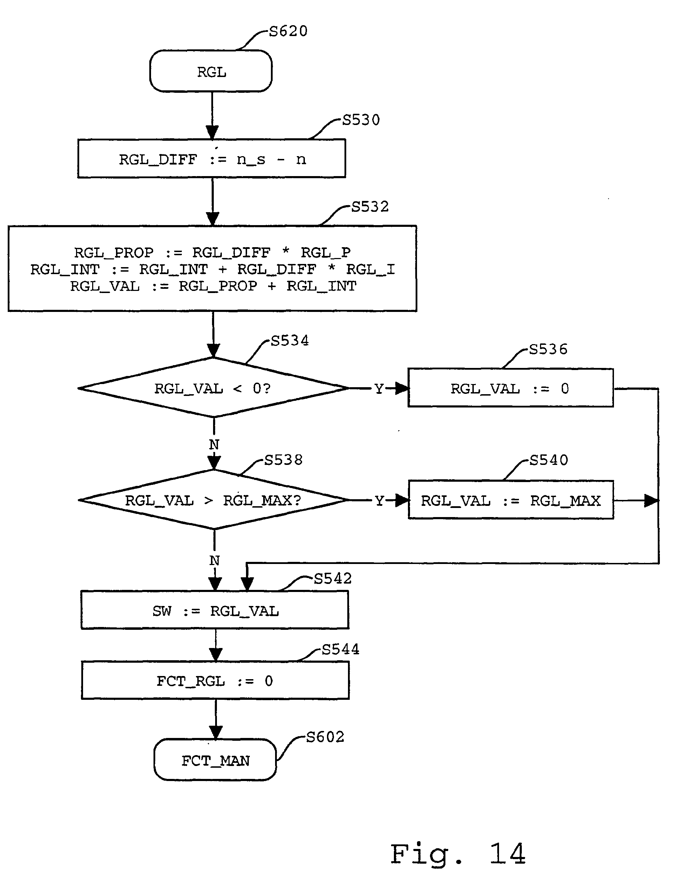

Die Drehzahlberechnungsfunktion CALC_n S616 (Fig. 7) dient zur Berechnung der Istdrehzahl n. Die Reglerfunktion RGL S620 (Fig. 14) berechnet den Stellwert SW (Fig. 5) und gibt diesen an das Stellglied SG 63 des Motors M aus.

Soll eine bestimmte anforderbare Funktion durch eine andere Funktion oder durch eine Interruptroutine angefordert werden, so wird das Bit der angeforderten Funktion in dem Funktionsregister 605 (Fig. 8) auf 1 gesetzt, z.B. FCT_XY = 1. Das nächste Mal, wenn der Funktionsmanager 601 (Fig. 7) bei einem Durchlauf keine andere anforderbare Funktion mit höherer Priorität aufgerufen hat, wird diese Funktion ausgeführt.

Ist eine angeforderte Funktion abgearbeitet, so setzt sie selbst ihr Anforderungsbit wieder auf 0, also z.B. FCT_XY = 0. Dies ermöglicht es, längere Funktionen, die nicht in einem Durchlauf abgearbeitet werden können, weil sie z.B. zu lange Zeit benötigen, aufzuteilen und in mehreren Aufrufen abzuarbeiten.

In Fig. 7 wird nach S606 in einer vorbestimmten Reihenfolge, von der wichtigsten anforderbaren Funktion ausgehend, geprüft, ob deren Anforderungsbit gesetzt ist. Ist dies bei einer Funktion der Fall, so wird diese ausgeführt, und daraufhin wird wieder an den Anfang FCT_MAN S602 des Funktionsmanagers 601 gesprungen. Die Reihenfolge der Überprüfung des Funktionsregisters 605 gibt die Priorisierung der anforderbaren Funktionen vor. Je höher eine solche Funktion in dem Funktionsmanager 601 steht, desto höher ist ihre Priorität.

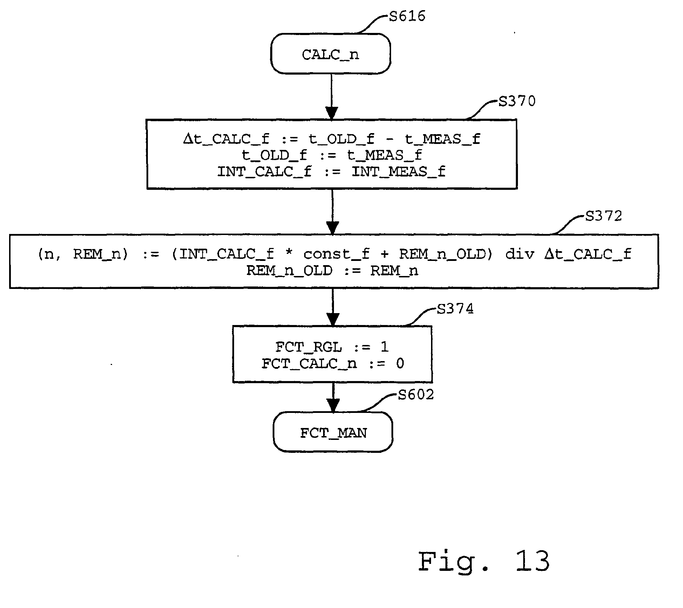

Anhand eines Beispiels soll die Funktionsweise des Funktionsmanagers 601 erläutert werden. Springt z.B. das Programm von S610 nach S614, so wird in S614 überprüft, ob das Funktionsregisterbit FCT_CALC_n = 1 ist, ob also die Drehzahlberechnung CALC_n S616 angefordert wurde, die in Fig. 13 dargestellt ist. Ist dies der Fall, so wird nach S616 gesprungen, und die Drehzahlberechnung wird durchgeführt. Bei Beendigung setzt die Drehzahlberechnung CALC_n S616 das Anforderungsbit FCT_CALC_n wieder auf 0 zurück, vgl. S374 in Fig. 13, und es wird wieder an den Anfang S602 des Funktionsmanagers 601 gesprungen.

War in keiner der Abfragen bis S618 ein Anforderungsbit gesetzt, so wird ohne eine Aktion nach S602 zurückgesprungen, und die Funktionen S604 und S606, die bei jedem Durchlauf des Funktionsmanagers 601 ausgeführt werden, werden erneut abgearbeitet.

Durch den Funktionsmanager erhält man eine optimale Ausnutzung der Ressourcen des μC 23.

**Messung der Frequenz f**

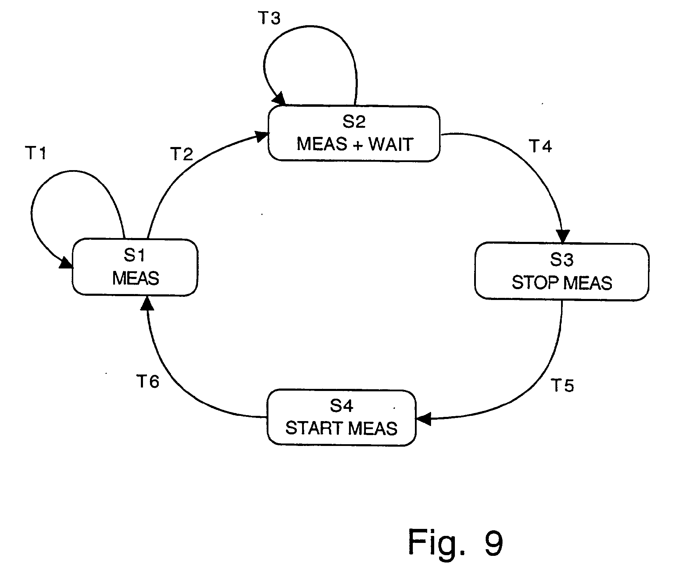

**Fig. 9** zeigt ein Zustandsdiagramm für die Messung der Frequenz. Das Zustandsdiagramm weist vier Zustände S1, S2, S3 und S4 sowie sechs Übergänge T1, T2, ..., T6 auf. Zu jedem Übergang gehört ein Ereignis und eine Aktion.

Die folgende **Tabelle 1** zeigt für jeden Übergang das zugehörige Ereignis und die zugehörige Aktion.

| Übergang | Ereignis | Aktion |
|---|---|---|
| T1 | Interrupt durch Flankenwechsel des Signals f | TIMER1 lesen und speichern, INT_CNT_f erhöhen |
| T2 | Interrupt durch TIMER0 nach Zeit T_A | Frequenzmessung freigeben |
| T3 | Interrupt durch Flankenwechsel des Signals f | TIMER1 lesen und speichern, INT_CNT_f erhöhen |
| T4 | INT_CNT_f mod MOD_f=0 | t_MEAS_f, INT_MEAS_f berechnen, CALC n starten |
| T5 | instantan | keine |
| T6 | instantan | Vorbereitung für neue Messung |

Das Zustandsdiagramm aus Fig. 9 wird anhand von Fig. 10 erklärt.

**Fig. 10A** zeigt schematisch einen vierpoligen permanentmagnetischen Rotor 32'' und einen Rotorstellungssensor 61, welcher hier z.B. als Hallsensor ausgebildet ist. Der Rotor 32'' hat zwei Südpole (S) 35 und 35' und zwei Nordpole (N) 34 und 34'. Der Rotorstellungssensor 61 detektiert das Rotorstellungssignal f, welches bei jedem Wechsel des sich drehenden Rotors 32'' von einem Nordpol (N) zu einem Südpol (S) bzw. umgekehrt eine Flanke 110 aufweist. Bei jeder Flanke 110 (Fig. 6B und 10A) des Signals f wird in dem μC 23 ein Hall-Interrupt 630 ausgelöst (Fig. 7). Pro Umdrehung des Rotors 32'' werden also vier Hall-Interrupts 630 ausgelöst.

Die Fig. 10B und Fig. 10C zeigen ein zugehöriges Diagramm mit einem Beispielablauf für die Messung der Frequenz f.

**Fig. 10B** zeigt TIMER0-Interrupts 191, 193, 195, welche jeweils nach einer Zeit T_A, z.B. T_A = 25 ms, durch den Timer TIMER0 (im μC 23) ausgelöst werden.

**Fig. 10C** zeigt das Frequenzsignal f, welches von dem Rotorstellungssensor 61 detektiert wird. An den Stellen 197, 199 und 201 werden jeweils die beiden Variablen INT_MEAS_f (Anzahl der Flankenwechsel seit der letzten Messung) und t_MEAS_f (Zeitpunkt der momentanen Messung) an die Drehzahlberechnung CALC_n weitergegeben, die nachfolgend bei Fig. 13 erläutert wird.

Der Wert INT_MEAS_f wird mit Hilfe eines Flankenzählers INT_CNT_f (im μC 23) bestimmt, welcher bei jedem Start einer Messung auf 0 zurückgesetzt und bei jeder Flanke 110 um 1 erhöht wird. Der Wert INT_MEAS_f entspricht damit der Variablen N aus Fig. 1 und Fig. 3, also der Zahl der gemessenen Ereignisse 110.

t_MEAS_f wird mit Hilfe von TIMER1 bestimmt, der bevorzugt als Ringzähler ausgebildet ist, was eine lückenlose Erfassung aufeinanderfolgender Werte von t_MEAS_f ermöglicht

Die in Klammern angegebenen Zahlen bezeichnen den jeweiligen Zeitpunkt bzw. Zeitbereich, für den der betreffende Wert gilt. So wird z.B. zum Zeitpunkt 199 der Wert INT_MEAS_f(197-199), der die Anzahl der Flanken in dem Bereich von 197 bis 199 enthält, und der Wert t_MEAS_f(199), der den Zeitpunkt der Messung bei 199 enthält, an die Drehzahlberechnung CALC_n S616 übergeben. INT_MEAS_f(197-199) beträgt z.B. 8, da acht Flanken 110 gezählt werden.

**Fig. 10D** zeigt den Wert, der sich bei der Berechnung von INT_CNT_f mod 4 ergibt. Die MODULO-Berechnung mit N mod MOD_f wurde in der Beschreibung zu Fig. 3 erklärt. Der Wert N entspricht in diesem Ausführungsbeispiel dem Wert INT_CNT_f, und die Größe MOD_f wurde gleich vier gewählt, da der Rotor 32'' vierpolig ausgebildet ist, also pro Umdrehung eine Zahl von A=4 Ereignissen 110 auftritt. Wie in Fig. 10D dargestellt, ändert sich der Wert von INT_CNT_f mod 4 bei jeder Flanke 110 des Signals f gemäß der Zahlenfolge 0, 1, 2, 3, 0, 1, 2, ..., und zwar ab Einschalten des Motors.

Anhand von Fig. 9, der Tabelle in der Beschreibung zu Fig. 9, und der Fig. 10 wird nun die Frequenzmessung erläutert.

Zu dem in Fig. 10B bzw. Fig. 10C beliebig gewählten Zeitpunkt t = 0 befindet sich die Frequenzmessung aus Fig. 9 im Zustand S1.

Bei jeder Flanke 110 (Fig. 10A) von f wird ein Hall-Interrupt 630 (Fig. 7) ausgelöst. Dieser bewirkt folgendes:

- Die Routine Hall-Interrupt S631 (Fig. 12) wird durch den Hall-Interrupt 630 ausgelöst,
- in der Routine Hall-Interrupt S631 wird der Zähler INT_CNT_f für die Anzahl der Flanken 110 um 1 erhöht (S322 in Fig. 12),
- in der Routine Hall-Interrupt S631 wird der augenblickliche Wert des Ringzählers TIMER1 gespeichert (S322 in Fig. 12).

Im Zustandsdiagramm (Fig. 9) ist dies dargestellt als Übergang T1 von Zustand S1 zu S1. Das Ereignis ist hier ein durch eine Flanke 110 ausgelöster Hall-Interrupt 630, und die Aktion besteht in der Zählung der Flanke 110 im Flankenzähler INT_CNT_f, und der Speicherung des augenblicklichen Wertes des Ringzählers TIMER1.

Ein anderes Ereignis löst den Übergang T2 von Zustand S1 nach Zustand S2 aus. Das Ereignis ist das Auftreten eines durch den Timer TIMER0 ausgelösten TIMER0-Interrupts. Der Timer TIMER0 löst in vorgegebenen Abständen T_A (Fig. 1, 3, 10B) einen TIMER0-Interrupt 638 aus, z.B. an den Stellen 191, 193, 195. In der zugehörigen Interruptroutine TIMER0-Interrupt S639 (Fig. 7 und 11) wird die Frequenzmessung freigegeben. Der Timer TIMER0 definiert also aufeinanderfolgende Fenster mit der Breite T_A.

Von Zustand S2 aus soll die eigentliche Messung von INT_MEAS_f und t_MEAS_f stattfinden.

Wie Fig. 10 zeigt, findet die jeweilige Messung nicht genau zu den Zeitpunkten 191, 193 und 195 der Anforderung statt, sondern zu einem geeigneten Zeitpunkt, welcher gewöhnlich etwas später liegt.

Im Zustand S2 werden weiterhin die Flanken 110 des Signals f erfasst, und es findet bei jeder Flanke 110 ein Übergang T3 von S2 nach S2 analog zu T1 statt, in dem der augenblickliche Wert des Ringzählers TIMER1 ausgelesen und gespeichert und der Flankenzähler INT_CNT_f erhöht wird.

Zu der endgültigen Messung der Werte INT_MEAS_f und t_MEAS_f muss eine weitere Bedingung erfüllt sein. Wie in der Beschreibung zu Fig. 3 erläutert, sind die Marken, welche auf dem Rotor 32'' angebracht sind, also hier die Wechsel der Magnetisierung zwischen Nord und Süd, nicht immer symmetrisch am Rotor 32'' angeordnet. Daher ist es vorteilhaft, stets an der selben Marke zu messen, da man so sicher sein kann, dass an derselben Stelle des Rotors 32" gemessen wird.

Die Anzahl der Flanken 110 des Signals f wird in der Variablen INT_CNT_f gezählt, und gemäß Gleichung (3) kann die Bedingung, dass bei einem vierpoligen Rotor immer ein Vielfaches von ganzen Umdrehungen gemessen wird, mit

$$INT\_CNT\_f \bmod 4 = 0 \qquad\qquad (4)$$

erreicht werden, oder alternativ mit

$$INT\_CNT\_f \bmod 8 = 0,$$

wobei im letzteren Fall immer frühestens nach zwei vollen Umdrehungen, oder einem Vielfachen hiervon, gemessen wird. Bei INT_CNT_f mod 12 = 0 würde frühestens nach drei vollen Umdrehungen gemessen, etc. Hierdurch würde jedoch die Dynamik eines Reglers verschlechtert.

Bei Messung frühestens nach einer vollen Umdrehung muss also die Grösse INT_CNT_f mod 4 bei jeder Messung denselben Wert haben. Gewöhnlich wird dies der Wert Null sein, weil dann bei einem sechspoligen Rotor mit mod 6 (oder mod 12) gemessen werden kann, bei einem vierpoligen Rotor mit mod 4 (oder mit mod 8), und bei einem zweipoligen Rotor mit mod 2 oder mod 4, so dass nur die entsprechenden Parameter 12, 8, 6, 4 oder 2 in den μC 23 eingegeben werden müssen, um diesen auf einen anderen Motor umzustellen.

In Fig. 10D ist das Ergebnis von INT_CNT_f mod 4 für die jeweilige Flanke angegeben. Beispielsweise ist nach der Anforderung der Messung an der Stelle 193 die Flanke 199, welche die achte Flanke nach der Stelle 197 ist, die erste Flanke, bei welcher die Bedingung INT_CNT_f mod 4 = 0 der Gleichung (4) erfüllt ist (8 mod 4 = 0), und deshalb findet an der Stelle 199 eine Messung statt.

Falls also die Anzahl der Flanken ein Vielfaches von MOD_f, hier MOD_f =4, ist, findet in Fig. 9 ein Übergang T4 von S2 nach S3 statt, die Anzahl der erfassten Flanken seit der letzten Messung, welche in INT_CNT_f gespeichert ist, wird in INT_MEAS_f gespeichert (S330 in Fig. 12), und der Zeitpunkt der aktuellen Messung wird in t_MEAS_f gespeichert (S330 in Fig. 12). Die Werte INT_MEAS_f und t_MEAS_f werden daraufhin der Drehzahlberechnung CALC_n S616 übergeben, die in Fig. 13 dargestellt ist, vgl. dort S370.

Aus dem aktuellen Wert t_MEAS_f(199) und dem gespeicherten Wert t_MEAS_f(197) der letzten Messung kann die Zeit Δt_MEAS_f(197-199) bestimmt werden, welche für die in der Variablen INT_MEAS_f(197-199) gezählten Flanken benötigt wurde.

Eine alternative Möglichkeit, die Zeit Δt_MEAS_f zu bestimmen, liegt darin, die Zeit jeweils am Anfang einer Messung auf Null zurückzusetzen. Dies kann z.B. durch Setzen des Timers TIMER1 auf Null erfolgen. Am Ende der Messung entspricht die Zeit im TIMER1 dem Wert Δt_MEAS_f. Hierdurch liegt an den Stellen 197, 199 und 201 direkt INT_MEAS_f und Δt_MEAS_f (vgl. Fig. 2) vor. Ein Nachteil des Zurücksetzens des Timer TIMER1 liegt darin, dass er dann schlecht gleichzeitig für andere Messungen verwendet werden kann.

Von Zustand S3 (Fig. 9), in welchem die letzte Messung abgeschlossen ist, führt ein instantaner Übergang T5 zu dem Zustand S4, in welchem eine neue Messung beginnt.

Vom Zustand S4 führt ein instantaner Übergang T6 zu dem Zustand S1, und die Frequenzmessung ist wieder im Ausgangszustand S1. Während T6 wird die nächste Messung vorbereitet. Z.B. wird der Zähler INT_CNT_f (für die Zahl der Flanken 110) wieder auf Null zurückgesetzt (S330 in Fig. 12).

Die Messung gemäß Fig. 9 und 10 hat mehrere Vorteile:

Bei interruptbasierten Messungen wird man im allgemeinen zur Bestimmung der Drehzahl entweder bei jedem Interrupt oder nach einer festen Anzahl von Interrupts die Zeit zum vorherigen Interrupt messen und daraus die Drehzahl berechnen. Hierdurch kommen bei steigender Drehzahl immer häufiger neue Messwerte, welche verarbeitet werden müssen. Bei sehr hohen Drehzahlen würde dies zu einer Überlastung des μC 23 und zur Nichtberücksichtigung von einzelnen Messwerten führen.

Bei dem vorliegenden Messverfahren wird in vorgegebenen Abständen T_A jeweils eine neue Messung eingeleitet. Der μC 23 wird dadurch bei allen Drehzahlen bzw. Frequenzen gleich belastet.

Weiterhin weist das vorliegende Verfahren den Vorteil auf, dass bei der Messung des Signals f mindestens bis zum nächsten Interrupt gemessen wird. So wird nicht zu irgendeinem Zeitpunkt, der z.B. in der Mitte zwischen zwei Flanken 110 liegt, gemessen, sondern es wird immer von Flanke zu Flanke gemessen, also von Ereignis zu Ereignis, was die Genauigkeit der Messung erheblich erhöht, vgl. Fig. 10.

Eine weitere Erhöhung der Genauigkeit ergibt die Messung von jeweils einem Vielfachen von MOD_f Flankenwechseln, da so z.B. Messfehler durch Magnetisierungsfehler bei einem permanentmagnetischen Rotor bzw. durch Symmetriefehler bei einer von außen zugeführten Frequenz vermieden werden. Dies bedeutet z.B. bei einem vierpoligen Motor, dass eine Messung frühestens beim vierten, beim 8., beim 12. etc. Flankenwechsel erfolgt, nämlich immer dann, wenn INT_CNT_f mod 4 = 0 ist (Bei einem vierpoligen Rotor werden pro Umdrehung vier Flanken 110 erzeugt).

Für diese Art der Messung bei einem Rotorstellungssignal f mit einer festen Anzahl A von Ereignissen (Impulse in Fig. 3, Flanken 110 in Fig. 10A) pro Umdrehung des Rotors 32" wird MOD_f auf diese feste Anzahl A gesetzt, so dass jeweils nach einer vollen Umdrehung in der gleichen Stellung des Rotors 32" gemessen wird. Es wird also immer bei dem Ereignis gemessen, welches bei einer bestimmten Rotorstellung des Rotors 32'' erzeugt wird. Hierzu ist es nicht notwendig, dass es ein besonderes Ereignis gibt, welches von dem Rotorstellungssensor 61 detektiert wird und bei welchem bekannt ist, dass eine volle Umdrehung durchlaufen wurde. Vielmehr können alle Ereignisse pro Umdrehung des Rotors 32" identisch sein, da das Messen von ganzen Umdrehungen durch die besondere Art der Messung mit MOD_f automatisch abläuft.

Diese Art der Messung eignet sich in gleicher Weise für die Messung eines Frequenzsignals f, welches dem µC 23 von einem externen Frequenzgenerator zugeführt wird. Solche Signale f haben eventuell ebenfalls Unsymmetrien während einer Periode der Frequenz f, wenn z.B. ein Nulldurchgang bei der halben Periode etwas verschoben ist, so dass z.B. eine Messung mit mod 2 oder mod 4 Vorteile haben kann und genauere Resultate bringt.

**Fig. 15** zeigt einen Rotor 32' mit zwei Marken 81 und 82 und dem Rotorstellungssensor 61, analog Fig. 3. Das Rotorstellungssignal f weist Ereignisse in Form von Impulsen an den Stellen 217, 218, 219, ..., 228 auf. Die Impulse werden abwechselnd von der weissen Marke 81 und der schwarzen Marke 82 erzeugt, wenn diese an dem Rotorstellungssensor 61 vorbeidrehen und sind deshalb - zum besseren Verständnis - weiss und schwarz dargestellt. Zusätzlich tritt ein Störimpuls S zwischen den Impulsen 220 und 221 auf. Weiterhin sind Steuersignale 211, 213 und 215 zur Anforderung einer Messung dargestellt.

Unter den Impulsen ist in der Reihe 232 der Wert des Zählers N für die Anzahl der Impulse und in der Reihe 230 das Ergebnis der Berechnung von N mod 2 angegeben.

Eine Messung endet/beginnt im Normalfall immer dann, wenn durch ein Steuersignal 211, 213 bzw. 215 eine Messung angefordert ist und zudem der Wert von N mod 2 gleich Null ist, wenn sich der Rotor 32' also seit der letzten Messung ein ganzzahliges Vielfaches einer Umdrehung gedreht hat.

Der Störimpuls S bewirkt, dass bei der Messung in dem Zeitraum Δt(218-223) angenommen wird, dass der Rotor 32' zwischen den Impulsen 220 und 221 eine ganze Umdrehung zurückgelegt hat, obwohl er erst eine halbe Umdrehung zurückgelegt hat. Hierdurch wird nach dem Steuersignal 213 anstatt bei dem "weissen" Signal 222 bei dem "schwarzen" Signal 223 gemessen, da N mod 2 nach dem Störimpuls S nicht mehr bei den "weissen" Impulsen den Wert Null hat, sondern bei den "schwarzen" Impulsen.

Schon in dem folgenden Zeitraum Δt(223-227) funktioniert die Messung jedoch wieder richtig, da jetzt jeweils bei "schwarzen" Impulsen gemessen wird. Es findet also durch den Störimpuls S eine Verschiebung der Stellung des Rotors 32' statt, an der gemessen wird. Dasselbe würde gelten, wenn ein Impuls fehlt. Das Messverfahren arbeitet also nach einem Fehlersignal S richtig weiter und misst weiterhin ein Vielfaches von einer ganzen Umdrehung. Dies stellt einen wichtigen Vorteil dieser Ausführungsform dar.

## Flussdiagramme zur Messung von f

Die Fig. 11 und Fig. 12 zeigen Flussdiagramme zu einem Programm für die in Fig. 9 und 10 beschriebene Messung.

**Fig. 11** zeigt die Routine TIMER0-Interrupt S639 (Fig. 7), welche jeweils nach der Zeit T_A (Fig. 10) die Frequenzmessung anfordert, welche anschließend in der Routine Hall-Interrupt S631 stattfindet.

Es werden folgende Variablen benutzt

| | |
|---|---|
| CNT_T_A | Interner Zähler für die Zeit T_A |
| T_A_TIME | Grenzwert für neue Messung |
| DO_MEAS_f | Flag zum Aufrufen der Frequenzmessung |

Bei jedem Auftreten eines TIMER0-Interrupts 638 (Fig. 7) wird die TIMER0-Interruptroutine S639 ausgeführt.

In S352 werden evtl. weitere, hier nicht ausgeführte Schritte durchlaufen, falls z.B. durch den Timer TIMER0 andere Programmteile gesteuert werden sollen.

In S354 beginnt ein Subtimer Subtimer_T_A. Subtimer bedeutet, dass durch die im folgenden erläuterten Schritte S356, S358 und S362 die eigentliche Aktion in S360 erst nach einer bestimmten Anzahl von TIMER0-Interrupts ausgelöst wird. Dies hat den Vorteil, dass der Timer TIMER0 auch für andere Zwecke verwendet werden kann, welche häufiger aufgerufen werden müssen.

In S356 wird der interne Zähler CNT_T_A um 1 erhöht.

In S358 wird überprüft, ob der Zähler CNT_T_A größer oder gleich dem Wert T_A_TIME ist.

Falls nein, so wird sofort an das Ende S364 gesprungen, und die TIMER0-Interruptroutine wird mit dem Befehl "RETI" verlassen.

Falls jedoch in S358 der Zähler CNT_T_A den Wert T_A_TIME erreicht hat, so wird in S360 DO_MEAS_f auf 1 gesetzt.

Mit DO_MEAS_f = 1 wird der Interruptroutine Hall-Interrupt S631 (Fig. 12) mitgeteilt, dass eine Messung der Frequenz f gestartet werden soll.

Der Aufruf in S360 findet z.B. alle 25 ms statt, wenn der TIMER0-Interrupt alle 10 $\mu$s ausgelöst wird, und der Wert T_A_TIME = 2500 ist.

Die Zeit T_A muss an den jeweiligen Motor angepasst werden. Gibt der Rotorstellungssensor 61 z.B. viele Ereignisse pro Umdrehung des Rotors 32, und dreht der Rotor 32 schnell, so kann T_A kürzer gewählt werden. Dreht der Rotor 32 jedoch langsam, so muss T_A länger, z.B. T_A = 250 ms, gewählt werden

In S362 wird der Zähler CNT_T_A wieder auf Null zurückgesetzt, um den Subtimer Subtimer_T_A neu zu starten.

In Fig. 10 findet der Aufruf von S360 an den Stellen 191, 193 und 195 statt.

**Fig. 12** zeigt ein Ausführungsbeispiel für die Interruptroutine Hall-Interrupt S631, welche bei jedem durch das Auftreten einer Flanke 110 (Fig. 4B) des Signals f ausgelösten Hall-Interrupt 630 ausgeführt wird. Dieser Interrupt wird so bezeichnet, weil er gewöhnlich durch das Signal eines Hallgenerators 61 (im Motor M 32) ausgelöst wird. Selbstverständlich könnte er ebenso durch eine optischen oder mechanischen Sensor ausgelöst werden, und man könnte ihn auch als sensorgesteuerten Interrupt bezeichnen.

Es werden folgende Variablen benutzt

| | |
|---|---|
| INT_CNT_f | Interruptzähler für die Erfassung der Flanken des Signals f |
| INC_f | Inkrementwert |
| t_END_f | Zeitpunkt des letzten Interrupts der Erfassung |
| MOD_f | Anzahl der Interrupts für mod-Berechnung, vgl. die Gleichungen (3) und (3a) |
| t_MEAS_f | Gemessene Zeit des letzten Interrupts |
| INT_MEAS_f | Zahl der gemessenen Interrupts seit der letzten Messung |
| DO_MEAS_f | Flag zum Aufrufen der Frequenzmessung |
| FCT_CALC_n | Funktionsregisterbit der Funktion CALC_n S616 (Fig. 7 und 8) |

In S302 können beliebige Schritte ausgeführt werden.

Die Routine Hall-Interrupt S631 sorgt bei einem elektronisch kommutierten Motor in COMMUT S304 für die elektronische Kommutierung. Diese entfällt bei einem Kollektormotor.

In MEAS_f S320 beginnt die Erfassung und Messung des Signals f. In S322 wird der Interruptzähler INT_CNT_f , welcher z.B. 1 Byte groß ist, um den Wert INC_f, z.B. INC_f = 1, erhöht, und der Wert t_TIMER1 des Ringzählers TIMER1 wird in t_END_f gespeichert. Damit sind sowohl die Anzahl der Interrupts als auch die momentane Zeit erfasst.

In S324 wird mit INT_CNT_f mod MOD_f = 0 überprüft, ob der Wert im Interruptzähler INT_CNT_f ein Vielfaches von MOD_f ist. Bei MOD_f = 4 ist z.B. INT_CNT_f = 20 ein Vielfaches von MOD_f, also 20 mod 4 = 0. Falls INT_CNT_f nicht ein Vielfaches von MOD_f ist, so wird an das Ende S334 der Interruptroutine gesprungen. Falls INT_CNT_f ein Vielfaches von MOD_f ist, so wird in S326 überprüft, ob DO_MEAS_f = 1 ist, ob also in dem Schritt S360 der Interruptroutine TIMER0-Interrupt S639 (Fig. 11) eine Messung der Frequenz f angefordert wurde. Falls nein, soll noch nicht gemessen werden, und es wird an das Ende S334 gesprungen. Falls ja, so wird in S328 anhand des Funktionsregisterbits FCT_CALC_n überprüft, ob die letzte Drehzahlberechnung bereits abgeschlossen ist. Falls FCT_CALC_n = 1 ist, so wird an das Ende S334 gesprungen. Dies verhindert, dass Messungen verlorengehen, wenn die Drehzahlberechnung CALC_n S616 zu viel Zeit benötigt. Dieser Sonderfall tritt im normalen Betrieb nicht auf.

In S330 werden die Variablen t_MEAS_f und INT_MEAS_f gesetzt, welche der Drehzahlberechnung CALC_n S616 übergeben werden, die bei Fig. 13 beschrieben wird.

Hierzu wird t_MEAS_f auf den letzten erfassten Timerwert t_END_f des Ringzählers TIMER1 gesetzt, INT_MEAS_f wird auf den Wert des Interruptzählers INT_CNT_f gesetzt, und INT_CNT_f wird auf Null zurückgesetzt.

In S332 wird die Drehzahlberechnung CALC_n S616 (Fig. 13) durch Setzen von FCT_CALC_n auf 1 angefordert, und die Messanforderung wird durch Zurücksetzen von DO_MEAS_f auf Null zurückgesetzt.

Die Routinen TIMER0-Interrupt S639 (Fig. 11) und Hall-Interrupt S631 (Fig. 12) bewirken somit zusammen eine Messung der Frequenz, wie sie in Fig. 9 beschrieben ist.

Falls der $\mu$C 23 die Operation mod nicht beherrscht, bestehen andere Möglichkeiten.

Bei vielen $\mu$Cs ergibt eine ganzzahlige Division mit dem Befehl "div" als Ergebnis sowohl den ganzzahligen Quotienten als auch den nicht-negativen Rest. So ergibt z.B. 7 div 4 als Ergebnis den Quotienten 1 und den Rest 3. Bei solchen $\mu$Cs kann die Operation div zur Berechnung des Restes verwendet werden, und es wird dann nur zu Zeitpunkten gemessen, an denen der Rest jeweils denselben Wert hat.

Eine weitere Möglichkeit der Berechnung von X mod MOD_f besteht z.B. in der Verwendung einer weiteren Variablen MOD_CNT, welche bei jeder Erhöhung der Variablen X ebenfalls erhöht wird, und welche bei Erreichen von MOD_f auf Null zurückgesetzt wird. Die Variable MOD_CNT gibt dann das Ergebnis von X mod MOD_f wieder.

**Fig. 13** zeigt die Routine CALC_n S616, welche nach der Messung des Timerwerts t_MEAS_f und der Anzahl der Flanken 110 (Fig. 4) des Signals f in INT_MEAS_f durch die Routine Hall-Interrupt (S332 in Fig. 12) angefordert wird.

Es werden folgende Variablen benutzt

| | |
|---|---|
| $\Delta$t_CALC_f | Zeitdifferenz zur letzten Messung |
| t_OLD_f | Zeitpunkt der letzten Messung |
| t_MEAS_f | Zeitpunkt der momentanen Messung |
| INT_CALC_f | Anzahl der Interrupts seit der letzten Messung für die Berechnung |
| INT_MEAS_f | Übergebene Anzahl der Interrupts seit der letzten Messung |
| n | Drehzahl des Motors M |
| REM_n | Rest der ganzzahligen Division |
| const_f | Faktor zur Parametrierung von INT_CALC_f |
| REM_n_OLD | Rest der ganzzahligen Division der letzten Berechnung |

In S370 wird die Differenz zwischen dem Timerwert t_OLD_f der letzten Messung und dem aktuellen Timerwert t_MEAS_f berechnet und in der Variablen $\Delta$t_CALC_f gespeichert, welche dem Wert $\Delta$t_MEAS_f aus Fig. 10 entspricht. Die Differenz wird bei Ringzählern üblicherweise mit Hilfe des Zweierkomplements gebildet. Der aktuelle Timerwert t_MEAS_f wird daraufhin für die nächste Messung in t_OLD_f gespeichert, und die gemessene Anzahl der Interrupts INT_MEAS_f wird in INT_CALC_f gespeichert.

In S372 wird die Drehzahl n berechnet. Diese ist proportional zu dem Quotienten aus der Anzahl der Interrupts INT_CALC_f, einem Maß für die Anzahl der Umdrehungen, und der hierfür benötigten Zeit $\Delta$t_CALC_f. Es gilt

$$n = \text{const\_f} * \text{INT\_CALC\_f} / \Delta t\_\text{CALC\_f} \qquad (5)$$

const_f ist eine Proportionalitätskonstante.

Der Interruptzähler INT_CALC_f, welcher in diesem Ausführungsbeispiel z.B. 4 Byte groß ist, wird mit const_f multipliziert.

Die Konstante const_f kann entweder so gewählt werden, dass das Ergebnis der Division in S372 den Bereich, den der Wert n, welcher z.B. zwei Byte bzw. 16 Bit groß ist, gut ausnutzt. Dies kann z.B. erreicht werden, indem const_f so gewählt wird, dass bei der Anzahl der Impulse bei der maximalen Drehzahl dividiert durch die Messfensterzeit T_A die Drehzahl ungefähr den Wert $2^{15}$ (wenn der Wert n 16 Bit groß ist) erhält. Hierdurch erhält man eine hohe Genauigkeit, die Drehzahl n entspricht jedoch nicht der Drehzahl n_phys, gemessen in U/min.

Falls die Drehzahl n der Drehzahl n_phys mit der Einheit U/min entsprechen soll, so muss const_f als

$$\text{const\_f} = 60 * TF / \text{MOD\_f} \qquad (6)$$

gewählt werden, wobei TF ein Zeitfaktor ist, der aus dem Kehrwert der Zeiteinheit des Ringzählers TIMER1 in s gebildet wird. Ist z.B. die Zeiteinheit des Timers TIMER1 1 $\mu$s = $10^{-6}$ s, so wird TF = $10^6$ gewählt. Für einen vierpoligen Motor M mit MOD_f = 4 und TF = $10^6$ ergibt sich z.B. const_f = 15.000.000.

Für die Berechnung der Drehzahl n wird eine ganzzahlige Division div verwendet, welche als Ergebnis den ganzzahligen Quotienten n und den positiven Rest REM_n ergibt. Für eine Beschreibung des Operators div vgl. die Erläuterungen zu Fig. 10.

Als Beispiel folgt die Berechnung der Drehzahl für den Bereich zwischen den Stellen 197 und 199 aus Fig. 10:

INT_MEAS_f ist ein Byte groß, INT_CALC vier Byte und $\Delta$t_CALC_f zwei Byte.

INT_MEAS_f(197-199) hat den Wert 8, es wurden also seit der letzten Messung zum Zeitpunkt t_MEAS_f(197) acht Flanken 110 des Hallsignals (Fig. 10A) gezählt. INT_CALC_f bekommt in S370 den Wert INT_MEAS_f(197-199) = 8 zugewiesen. In S372 wird INT_CALC_f mit const_f = 15.000.000 multipliziert und erhält den Wert 120.000.000.

$\Delta$t_MEAS_f(197-199) hat - als Beispiel - den Wert 26.700, welcher bei einer Auflösung des Ringzählers TIMER1 von 1 $\mu$s einer Zeit von 26,7 ms entspricht. $\Delta$t_CALC_f bekommt in S370 den Wert $\Delta$t_MEAS_f(197) = 26.700 zugeordnet.

Die Division von INT_CALC_f durch $\Delta$t_CALC_f ergibt die Drehzahl n = 4494 und den Rest REM_n = 10200.

Die "physikalische" Drehzahl n_phys entspricht der Anzahl der Umdrehungen pro Minute. Aus 8 Hallwechseln geteilt durch 4 Hallwechsel pro Umdrehung (vierpoliger Rotor) ergeben sich 2 Umdrehungen, und die hierfür benötigte Zeit beträgt 0,0267 s. Damit ergibt sich eine physikalische Drehzahl n_phys = 2 / 0,0267 U/s = 74,906 U/s = 4494,4 U/min.

In der Berechnung wird auch der Rest REM_n_OLD der vorhergehenden Drehzahlberechnung durch Addition zu dem Produkt aus INT_CALC_f und const_f berücksichtigt.

In dem obigen Beispiel weicht z.B. die berechnete Drehzahl n ab, da die Division die ganze Zahl 4494 anstelle des eigentlichen Ergebnisses von ca. 4494,4 ergibt. Die Differenz geht jedoch nicht verloren, sondern sie wird bei der folgenden Division in S372 durch die Addition des Restes REM_n_OLD der letzten Division zum Zähler (Englisch: numerator) berücksichtigt.

Durch die Berücksichtigung des Restes REM_n_OLD wird in vorteilhafter Weise erreicht, dass keine Information verlorengeht, und sie führt zu einer messbaren Verbesserung des Reglers, sofern sie verwendet wird.

Nach der Berechnung von n und REM_n wird in S372 der Rest REM_n in REM_n_OLD für die nächste Berechnung gespeichert.

In S374 wird das Funktionsregisterbit FCT_CALC_n (Fig. 8; Fig. 12, S332) wieder auf Null zurückgesetzt, da die Drehzahlberechnung abgeschlossen ist, und mit FCT_RGL := 1 wird die Reglerfunktion angefordert.

Daraufhin wird an den Anfang S602 des Funktionsmanagers (Fig. 7) gesprungen.

**Reglerfunktion RGL**

**Fig. 14** zeigt beispielhaft ein Flussdiagramm für ein Ausführungsbeispiel der Reglertunktion RGL S620 (Fig. 7), welche aus der Drehzahl n und einer Solldrehzahl n_s, welche z.B. fest vorgegeben ist, einen Stellwert RGL_VAL berechnet und diesen ausgibt.

Es werden folgende Variablen benutzt

RGL_DIFF      Regeldifferenz
RGL_PROP     Proportionalanteil
RGL_P         Proportionalfaktor
RGL_INT       Integralanteil
RGL_I         Integralfaktor
RGL_VAL      Vom Regler berechneter Stellwert
RGL_MAX     Maximaler Stellwert

In S530 wird die Regeldifferenz RGL_DIFF als

$$RGL\_DIFF: = n\_s - n \qquad\qquad (7)$$

berechnet.

In S352 ist ein PI-Regler dargestellt.

Der Proportionalanteil RGL_PROP wird durch Multiplikation der Regeldifferenz RGL_DIFF mit dem Proportionalfaktor RGL_P berechnet.

Der neue Integralanteil RGL_INT wird durch Addition des vorhergehenden Integralanteils und der mit dem Integralfaktor RGL_I multiplizierten Regeldifferenz RGL_DIFF berechnet. Bevorzugt steht dem Integralanteil RGL_INT so viel Speicher zur Verfügung, dass keine Information der Regeldifferenz verloren geht.

Der Stellwert RGL_VAL ergibt sich aus der Summe des Proportionalanteils RGL_PROP und des Integralanteils RGL_INT.

In den Schritten S534 bis S540 wird eine Bereichsüberprüfung des Stellwerts RGL_VAL durchgeführt.

Ist der Stellwert RGL_VAL in S534 kleiner als Null, so wird er in S536 auf Null gesetzt.

Ist der Stellwert RGL_VAL in S538 größer als der maximal zulässige Wert RGL_MAX, so wird er in S540 auf RGL_MAX gesetzt.

Liegt der Wert von RGL_VAL innerhalb eines zulässigen Bereichs, so wird er unverändert verwendet.

In S542 wird das Register SW eines $\mu$C-internen D/A-Wandlers auf den Stellwert RGL_VAL gesetzt, und das Signal SW wird an das Stellglied 63 ausgegeben.

Die Reglerfunktion S620 ist damit abgearbeitet, und das Funktionsregisterbit FCT_RGL wird in S544 zurückgesetzt.

Daraufhin wird an den Anfang S602 des Funktionsmanagers (Fig. 7) zurückgesprungen.

Naturgemäß sind im Rahmen der vorliegenden Erfindung vielfache Abwandlungen und Modifikationen möglich. Z.B. kann die vorliegende Erfindung auch im Rahmen anderer Regler verwendet werden, oder auch ohne Regler zur Messung einer Drehzahl, oder einer Frequenz, die in Form einer Impulsfolge zugeführt wird. Die Erfindung wurde zwar in Verbindung mit einem Elektromotor beschrieben, weil das eine bevorzugte Anwendung darstellt, eignet sich aber in gleicher Weise für Brennkraftmaschinen, Turbinen etc.

**Patentansprüche**

1. Verfahren zur Gewinnung einer Information über die Drehzahl eines rotierenden, im folgenden Rotor genannten Objekts (32'), dem ein Sensor (61) zugeordnet ist, welcher ein Sensorsignal (f) liefert, das pro Umdrehung des Rotors eine Zahl A von Ereignissen nach Art von Impulsen, Flanken oder dergleichen aufweist, mit folgenden Schritten:

   a) Zu einem ersten Zeitpunkt (171) wird die Messung einer Drehzahlinformation eingeleitet;
   b) ein zweiter Zeitpunkt (176) wird ermittelt, an dem ein dem ersten Zeitpunkt folgendes Ereignis des Sensorsignals auftritt;
   c) die Zahl (N) der folgenden Ereignisse des Sensorsignals wird erfasst;
   d) an einem dritten, vorgegebenen Zeitpunkt (173) wird die Beendigung der Messung der Drehzahlinformation eingeleitet;
   e) ein vierter Zeitpunkt (182) wird ermittelt, an dem, nach dem dritten, vorgegebenen Zeitpunkt, die Zahl der Ereignisse seit dem zweiten Zeitpunkt gleich a*A ist, wobei a = 1, 2, 3 ..., und A = Zahl von Ereignissen pro voller Umdrehung des Rotors ist;
   f) aus dem zeitlichen Abstand ($\Delta t$) zwischen zweitem Zeitpunkt und viertem Zeitpunkt sowie der bis zum vierten Zeitpunkt erfassten Zahl (N) der Ereignisse wird eine Drehzahlinformation (n) berechnet.

2. Verfahren nach Anspruch 1, bei welchem sukzessive Messungen ohne Lücken aneinander anschließen.

3. Verfahren nach Anspruch 2, bei welchem die ersten Zeitpunkte (171, 173) aufeinanderfolgender Messungen vorgegebene zeitliche Abstände (T_A) aufweisen.

4. Verfahren nach einem der Ansprüche 1 bis 3, bei welchem mehrere Messungen durchgeführt werden und der dritte vorgegebene Zeitpunkt (213, 215) jeder Messung einen im wesentlichen konstanten zeitlichen Abstand (T_A) vom ersten Zeitpunkt dieser Messung hat.

5. Verfahren nach einem der Ansprüche 2 bis 4, bei welchem der dritte vorgegebene Zeitpunkt (173) einer Messung dem ersten Zeitpunkt einer darauffolgenden Messung entspricht.

6. Verfahren nach Anspruch 5, bei welchem der vierte Zeitpunkt (182) einer Messung dem zweiten Zeitpunkt einer darauffolgenden Messung entspricht.

7. Verfahren nach einem oder mehreren der vorhergehenden Ansprüche, bei welchem bei der Ermittlung einer Drehzahlinformation (n) eine Division zwischen einem der Zahl (N) der bis zum vierten Zeitpunkt erfassten Ereignisse proportionalen Wert und einem der Zeitdauer ($\Delta t$) zwischen zweitem und vierten Zeitpunkt proportionalen Wert durchgeführt wird.

8. Verfahren nach Anspruch 7, bei welchem die Drehzahlinformation durch eine Multiplikation mit einem konstanten Faktor parametriert wird.

9. Verfahren nach einem oder mehreren der vorhergehenden Ansprüche, bei welchem, beginnend beim Ereignis, welches zum zweiten Zeitpunkt auftritt, fortlaufend der Wert der Ordnungszahl (N) des Ereignisses modulo b*A gebildet wird, und die Messdauer ($\Delta t$) zwischen Ereignissen erfasst wird, bei denen der Wert von der Ordnungszahl des Ereignisses modulo b*A
derselbe ist, wobei

A = Zahl der Ereignisse pro Umdrehung des Rotors, und

b = 1, 2, 3 ... sind.

**10.** Verfahren nach einem der Ansprüche 7 bis 9, bei welchem dann, wenn eine Division zwischen einem der Zahl (N) der erfassten Ereignisse proportionalen Wert und einem der Zeitdauer ($\Delta t$) zwischen zweitem (176) und viertem (182) Zeitpunkt proportionalen Wert als Ergebnis eine ganzzahlige Drehzahlinformation und einen Rest ergibt, dieser Rest durch Addition zum Zähler der darauffolgenden Messung berücksichtigt wird.

**11.** Verfahren nach Anspruch 1, bei welchem die Berechnung der Drehzahlinformation (n) durch Division zwischen einem der bis zum vierten Zeitpunkt (182) erfassten Zahl der Ereignisse proportionalen Wert und einem dem zeitlichen Abstand ($\Delta t$) zwischen zweitem (176) und viertem (182) Zeitpunkt proportionalen Wert erfolgt, wobei ein bei der Teilung entstehender Rest (REM_n) erzeugt wird;

welches Verfahren folgende weitere Schritte aufweist:

g) ab dem vierten Zeitpunkt (182) wird eine zweite Messung gleicher Art durchgeführt;

h) bei der Auswertung der zweiten Messung wird der genannte Rest (REM_n) durch Addition zum Zähler berücksichtigt

**12.** Verfahren nach Anspruch 11, bei welchem, beginnend beim Ereignis, welches zum zweiten Zeitpunkt auftritt, fortlaufend der Wert einer Ordnungszahl (N) des Ereignisses modulo b*A gebildet wird, und die Messdauer ($\Delta t$) zwischen Ereignissen erfasst wird, bei denen der Wert von der Ordnungszahl des Ereignisses modulo b*A derselbe ist, wobei

A = Zahl der Ereignisse pro Umdrehung des Rotors, und

b = 1, 2, 3 ... sind.

**13.** Vorrichtung zur Gewinnung einer Information über die Drehzahl eines rotierenden, im folgenden Rotor (32; 32'; 32") genannten Objekts, mit einem Sensor (61), welcher ein Sensorsignal (f) liefert, das pro Umdrehung des Rotors eine feste Zahl A von Ereignissen (110) aufweist,

mit einer Quelle (23) für Steuersignale (191, 193, 195),

mit einem Zähler (INT_CNT_f) für Ereignisse (110) des Sensorsignals (f),

mit einer programmgesteuerten Vorrichtung (23) zum Auswerten der zuvor genannten Signale, welcher Vorrichtung ein Programm zugeordnet ist, das zur Ausführung der folgenden Schritte ausgebildet ist:

a) Durch ein erstes Steuersignal (191) wird die Messung einer Drehzahlinformation eingeleitet;

b) ein erster Zeitpunkt (197) wird ermittelt, an dem ein dem ersten Steuersignal folgendes Ereignis (110) des Sensorsignals (f) auftritt;

c) die Zahl der folgenden Ereignisse (110) des Sensorsignals (f) wird durch den Zähler (INT_CNT_f) erfasst;

d) durch ein zweiten Steuersignal (193) wird die Beendigung der Messung der Drehzahlinformation eingeleitet;

e) ein zweiter Zeitpunkt (199) wird ermittelt, an dem ein dem zweiten Steuersignal (193) folgendes Ereignis des Sensorsignals (f) auftritt, bei dem die Zahl der durch den Zähler (INT_CNT_f) erfassten Ereignisse (110) durch den Wert A geradzahlig teilbar ist;

f) aus dem zeitlichen Abstand ($\Delta t\_MEAS\_f(197-199)$) zwischen erstem Zeitpunkt (197) und zweitem Zeitpunkt (199) sowie der bis zum zweiten Zeitpunkt (199) erfassten Zahl der Ereignisse des Sensorsignals (f) wird eine Drehzahlinformation berechnet.

**14.** Vorrichtung nach Anspruch 13, bei welcher der Geber für die Steuersignale einen Timer (TIMER0) aufweist.

**15.** Vorrichtung nach Anspruch 14, bei welcher der Timer (TIMER0) als Steuersignal jeweils einen Interrupt (TIMER0-Interrupt) auslöst.

**16.** Vorrichtung nach einem oder mehreren der Ansprüche 13 bis 15, bei welcher zur Messung des zeitlichen Abstands zwischen erstem und zweitem Zeitpunkt ein Timer (TIMER1) vorgesehen ist.

**17.** Vorrichtung nach Anspruch 16, bei welcher der Timer (TIMER1) zur Messung des zeitlichen Abstands zwischen erstem und zweitem Zeitpunkt als Ringzähler ausgebildet ist.

**18.** Vorrichtung nach Anspruch 17, bei welcher der Ringzähler (TIMER1) fortlaufend zählt, und der zweite Zeitpunkt einer abgelaufenen Messung mit dem ersten Zeitpunkt einer neuen Messung übereinstimmt.

**19.** Vorrichtung nach einem oder mehreren der Ansprüche 13 bis 18, bei welcher als Sensorsignale die Rotorstellungssignale eines elektronisch kommutierten Motors dienen.

**20.** Vorrichtung nach einem oder mehreren der Ansprüche 13 bis 19, bei welcher der Zähler (INT_CNT_f) für Ereignisse (119) des Sensorsignals (f) in der programmgesteuerten Vorrichtung (23) vorgesehen ist.

**Claims**

**1.** Procedure for obtaining information about the rotational speed of a rotating object (32'), designated a rotor in the following, with which there is associated a sensor (61) which delivers a sensor signal (f) having, per revolution of the rotor, a number A of events according to type of pulses, flanks or the like, said procedure having the following steps:

a) at a first instant (171) the measurement of rotational-speed information is initiated;
b) there is determined a second instant (176) at which there occurs an event of the sensor signal that follows the first instant;
c) the number (N) of following events of the sensor signal is logged;
d) the termination of the measurement of the rotational-speed information is initiated at a third, predefined instant (173);
e) there is determined a fourth instant (182) at which, after the third, predefined instant, the number of events since the second instant is equal to a*A, wherein a = 1, 2, 3 ..., and A = number of events per full revolution of the rotor;
f) rotational-speed information (n) is calculated from the interval of time ($\Delta t$) between second instant and fourth instant and from the number (N) of events up to the fourth instant.

**2.** Procedure according to Claim 1, wherein successive measurements succeed one another without gaps.

**3.** Procedure according to Claim 2, wherein the first instants (171, 173) of successive measurements have predefined intervals of time (T_A).

**4.** Procedure according to any one of Claims 1 to 3, wherein a plurality of measurements are performed and the third predefined instant (213, 215) of each measurement is separated from the first instant of this measurement by a substantially constant interval of time (T_A).

**5.** Procedure according to any one of Claims 2 to 4, wherein the third predefined instant (173) of a measurement corresponds to the first instant of a succeeding measurement.

**6.** Procedure according to Claim 5, wherein the fourth instant (182) of a measurement corresponds to the second instant of a succeeding measurement.

**7.** Procedure according to one or more of the preceding claims, wherein, in the determination of rotational-speed information (n), division is performed between a value that is proportional to the number (N) of events logged up to the fourth instant and a value that is proportional to the period of time ($\Delta t$) between second and fourth instant.

**8.** Procedure according to Claim 7, wherein the rotational-speed information is parameterised by multiplication by a constant factor.

**9.** Procedure according to one or more of the preceding claims, wherein, beginning at the event which occurs at the second instant, the value of the ordinal number (N) of the event modulo b*A is formed serially, and there is logged the measurement period ($\Delta t$) between events in which the value of the ordinal number of the event modulo b*A is the same, wherein
A = number of events per revolution of the rotor, and
b = 1, 2, 3 ....

**10.** Procedure according to any one of Claims 7 to 9, wherein, whenever division between a value that is proportional to the number (N) of logged events and a value that is proportional to the period of time ($\Delta t$) between second (176) and fourth (182) instant produces, as a result, whole-numbered rotational-speed information and a remainder, this remainder is taken into account by addition to the counter of the succeeding measurement.

**11.** Procedure according to Claim 1, wherein the calculation of the rotational-speed information (n) is performed by division between a value that is proportional to the number of events logged up to the fourth instant (182) and a value that is proportional to the interval of time ($\Delta t$) between second (176) and fourth (182) instant, there being produced a remainder (REM_n) resulting from the division;

which procedure comprises the following further steps:

g) a second measurement of the same type is performed from the fourth instant (182);
h) in the evaluation of the second measurement, said remainder (REM_n) is taken into account by addition to the counter.

**12.** Procedure according to Claim 11, wherein, beginning at the event which occurs at the second instant, the value of an ordinal number (N) of the event modulo b*A is formed serially, and there is logged the measurement period ($\Delta t$) between events in which the value of the ordinal number of the event modulo b*A is the same, wherein

A = number of events per revolution of the rotor, and

b = 1, 2, 3 ....

**13.** Device for obtaining information about the rotational speed of a rotating object, designated a rotor (32; 32'; 32") in the following, comprising a sensor (61) which delivers a sensor signal (f) having, per revolution of the rotor, a fixed number A of events (110),

comprising a source (23) for control signals (191, 193, 195),

comprising a counter (INT_CNT_f) for events (110) of the sensor signal (f),

comprising a program-controlled device (23) for evaluating the aforementioned signals, there being associated with said device a program designed to execute the following steps:

a) the measurement of rotational-speed information is initiated by a first control signal (191);
b) there is determined a first instant (197) at which there occurs an event (110) of the sensor signal (f) that follows the first control signal;
c) the number of following events (110) of the sensor signal (f) is logged by the counter (INT_CNT_f);
d) the termination of the measurement of the rotational-speed information is initiated by a second control signal (193);
e) there is determined a second instant (199) at which there occurs an event of the sensor signal (f) that follows the second control signal (193) and in which the number of events (110) logged by the counter (INT_ CNT_f) is divisible by the value A to produce an even number;
f) rotational-speed information is calculated from the interval of time ($\Delta t$_MEAS_f(197-199)) between first instant (197) and second instant (199) and from the number of events of the sensor signal (f) up to the second instant (199).

**14.** Device according to Claim 13, wherein the generator for the control signals has a timer (TIMER0).

**15.** Device according to Claim 14, wherein the timer (TIMER0) triggers a respective interrupt (TIMER0-Interrupt) as a control signal.

**16.** Device according to one or more of Claims 13 to 15, wherein a timer (TIMER1) is provided for measuring the interval of time between first and second instant.

**17.** Device according to Claim 16, wherein the timer (TIMER1) is designed as a ring counter to measure the interval of time between first and second instant.

**18.** Device according to Claim 17, wherein the ring counter (TIMER1) counts serially, and the second instant of an expired measurement matches the first instant of a new measurement.

**19.** Device according to one or more of Claims 13 to 18, wherein the rotor position signals of an electronically commutated motor serve as sensor signals.

**20.** Device according to one or more of Claims 13 to 19, wherein the counter (INT_CNT_f) for events (119) of the sensor signal (f) is provided in the program-controlled device (23).

**Revendications**

1. Procédé pour obtenir une information sur la vitesse de rotation d'un objet (32') en rotation, appelé dans la suite rotor, auquel est associé un capteur (61) qui fournit un signal de capteur (f) qui, par tour de rotor, présente un nombre A d'événements sous la forme d'impulsions, de flancs ou analogues, comportant les étapes suivantes :

   a) on déclenche à un premier instant (171) la mesure d'une information de vitesse de rotation ;
   b) on détermine un deuxième instant (176) auquel se produit un événement du signal de capteur suivant le premier instant ;
   c) on saisit le nombre (N) d'événements suivants du signal de capteur ;
   d) on déclenche à un troisième instant prédéfini (173) la fin de la mesure de l'information de vitesse de rotation ;
   e) on détermine un quatrième instant (182) auquel, après le troisième instant prédéfini, le nombre d'événements depuis le deuxième instant est égal à a*A, avec a = 1, 2, 3 ..., et A = nombre d'événements par tour complet du rotor ;
   f) on calcule une information de vitesse de rotation (n) à partir de l'intervalle de temps ($\Delta$t) entre le deuxième instant et le quatrième instant ainsi que du nombre (N) d'événements saisis jusqu'au quatrième instant.

2. Procédé selon la revendication 1, dans lequel des mesures successives se suivent sans lacunes.

3. Procédé selon la revendication 2, dans lequel les premiers instants (171, 173) de mesures successives présentent des intervalles de temps (T_A) prédéfinis.

4. Procédé selon l'une des revendications 1 à 3, dans lequel on effectue plusieurs mesures et le troisième instant prédéfini (213, 215) de chaque mesure à un intervalle de temps (T_A) essentiellement constant par rapport au premier instant de cette mesure.

5. Procédé selon l'une des revendications 2 à 4, dans lequel le troisième instant prédéfini (173) d'une mesure correspond au premier instant d'une mesure suivante.

6. Procédé selon la revendication 5, dans lequel le quatrième instant (182) d'une mesure correspond au deuxième instant d'une mesure suivante.

7. Procédé selon l'une ou plusieurs des revendications précédentes, dans lequel, pour déterminer une information de vitesse de rotation (n), on effectue une division entre une valeur proportionnelle au nombre (N) d'événements saisis jusqu'au quatrième instant et une valeur proportionnelle à la durée ($\Delta$t) entre deuxième et quatrième instant.

8. Procédé selon la revendication 7, dans lequel l'information de vitesse de rotation est paramétrée par une multiplication par un facteur constant.

9. Procédé selon l'une ou plusieurs des revendications précédentes, dans lequel, en commençant par l'événement qui se produit au deuxième instant, on forme en permanence la valeur du nombre ordinal (N) de l'événement modulo b*A et on saisit la durée de mesure ($\Delta$t) entre des événements pour lesquels la valeur du nombre ordinal de l'événement modulo b*A est la même, avec
   A = nombre d'événements par tour du rotor et
   b=1,2,3...

10. Procédé selon l'une ou plusieurs des revendications 7 à 9, dans lequel, quand une division entre une valeur proportionnelle au nombre (N) d'événements saisis et une valeur proportionnelle à la durée ($\Delta$t) entre deuxième (176) et quatrième (182) instant donne pour résultat une information de vitesse de rotation entière et un reste, on tient compte de ce reste par addition au compteur de la mesure suivante.

11. Procédé selon la revendication 1, dans lequel on effectue le calcul de l'information de vitesse de rotation (n) par division entre une valeur proportionnelle au nombre d'événements saisis jusqu'au quatrième instant (182) et une valeur proportionnelle à l'intervalle de temps ($\Delta$t) entre deuxième (176) et quatrième (182) instant, un reste (REM_n) formé lors de la division étant généré ;
   lequel procédé comprend les étapes supplémentaires suivantes :

   g) on effectue à partir du quatrième instant (182) une deuxième mesure du même type ;

h) lors de l'évaluation de la deuxième mesure, on tient compte du reste précité (REM_n) par addition au compteur.

12. Procédé selon la revendication 11, dans lequel, en commençant par l'événement qui se produit au deuxième instant, on forme en permanence la valeur d'un nombre ordinal (N) de l'événement modulo b*A et on saisit la durée de mesure ($\Delta t$) entre des événements pour lesquels la valeur du nombre ordinal de l'événement modulo b*A est la même, avec

A = nombre d'événements par tour du rotor et

b=1,2,3...

13. Dispositif pour obtenir une information sur la vitesse de rotation d'un objet (32 ; 32' ; 32") en rotation, appelé dans la suite rotor, avec un capteur (61) qui fournit un signal de capteur (f) qui, par tour de rotor, présente un nombre A fixe d'événements,

avec une source (23) de signaux de commande (191, 193, 195),

avec un compteur (INT_CNT_f) des événements (110) du signal de capteur (f),

avec un dispositif commandé par programme (23) pour évaluer les signaux précités, auquel dispositif est associé un programme qui est conçu pour exécuter les étapes suivantes :

a) la mesure d'une information de vitesse de rotation est déclenchée par un premier signal de commande (191) ;

b) on détermine un premier instant (197) auquel se produit un événement (110) du signal de capteur (f) suivant le premier signal de commande ;

c) le nombre d'événements (110) suivants du signal de capteur (f) est saisi par le compteur (INT_CNT_f) ;

d) la fin de la mesure de l'information de vitesse de rotation est déclenchée par un deuxième signal de commande (193) ;

e) on détermine un deuxième instant (199) auquel se produit un événement du signal de capteur (f) suivant le deuxième signal de commande (193), pour lequel le nombre d'événements (110) saisis par le compteur (INT_CNT_f) est divisible à nombre pair par la valeur A ;

f) on calcule une information de vitesse de rotation à partir de l'intervalle de temps ($\Delta t\_MEAS\_f(197-199)$) entre le premier instant (197) et le deuxième instant (199) ainsi que du nombre d'événements du signal de capteur (f) saisis jusqu'au deuxième instant (199).

14. Dispositif selon la revendication 13, dans lequel le générateur des signaux de commande présente un timer (TIMER0).

15. Dispositif selon la revendication 14, dans lequel le timer (TIMER0) déclenche à chaque fois une interruption (TIMER0-Interrupt) comme signal de commande.

16. Dispositif selon l'une ou plusieurs des revendications 13 à 15, dans lequel il est prévu un timer (TIMER1) pour la mesure de l'intervalle de temps entre le premier et le deuxième instant.

17. Dispositif selon la revendication 16, dans lequel le timer (TIMER1) pour la mesure de l'intervalle de temps entre le premier et le deuxième instant est conçu comme compteur annulaire.

18. Dispositif selon la revendication 17, dans lequel le compteur annulaire (TIMER1) compte en continu et le deuxième instant d'une mesure terminée coïncide avec le premier instant d'une nouvelle mesure.

19. Dispositif selon l'une ou plusieurs des revendications 13 à 18, dans lequel on utilise comme signaux de capteur les signaux de position de rotor d'un moteur à commutation électronique.

20. Dispositif selon l'une ou plusieurs des revendications 13 à 19, dans lequel le compteur (INT_CNT_f) des événements (119) du signal de capteur (f) est prévu dans le dispositif commandé par programme (23).

Fig. 1

Fig. 2

EP 1 087 232 B1

Fig. 3

EP 1 087 232 B1

*37* — $\overline{MCLR}$

*23*

*42* — B5

*43* — B4

*38* — VSS

*44* — VDD

*45* — VSS

*39* — CLKIN

*40* — CLKOUT

*46* — SDA

*41* — C1

*47* — SCL

Fig.4

Fig.5

EP 1 087 232 B1

Fig. 6 A

Fig. 6 B

Fig. 6

Fig. 7

EP 1 087 232 B1

| | Bit7 | Bit6 | Bit5 | Bit4 | Bit3 | Bit2 | Bit1 | Bit0 |
|---|---|---|---|---|---|---|---|---|
| | X | X | X | X | X | FCT_RGL | FCT_CALC_n | FCT_XY |

605

MSB

LSB

Fig. 8

T3

S2
MEAS + WAIT

T4

T1

T2

S1
MEAS

S3
STOP MEAS

T6

T5

S4
START MEAS

Fig. 9

EP 1 087 232 B1

Fig. 10A

Fig. 10B

Fig. 10C

Fig. 10D

Fig. 10

TIMERØ-INT

191

193

195

T_A = 25 ms

T_A = 25 ms

0

t(TIMERØ)

f

197

INT_MEAS_f
t_MEAS_f(197)

199

INT_MEAS_f (197-199)
t_MEAS_f(199)

201

Δt_MEAS_f(197-199)

Δt_MEAS_f(199-201)

0

t(TIMER1)

3  0  1  2  3  0  1  2  3  0  1  2  3  0  1  2  3  0

INT_CNT_f mod 4

32"

35'

S  N

34

61

34'

N  S

35

110  110  110 110 110     110

f

Fig. 11

Fig. 12

S616

CALC_n

S370

$$\Delta t\_CALC\_f := t\_OLD\_f - t\_MEAS\_f$$
$$t\_OLD\_f := t\_MEAS\_f$$
$$INT\_CALC\_f := INT\_MEAS\_f$$

S372

$$(n, REM\_n) := (INT\_CALC\_f * const\_f + REM\_n\_OLD) div \Delta t\_CALC\_f$$
$$REM\_n\_OLD := REM\_n$$

S374

$$FCT\_RGL := 1$$
$$FCT\_CALC\_n := 0$$

S602

FCT_MAN

Fig. 13

S620

RGL

S530

RGL_DIFF := n_s - n

S532

RGL_PROP := RGL_DIFF * RGL_P
RGL_INT := RGL_INT + RGL_DIFF * RGL_I
RGL_VAL := RGL_PROP + RGL_INT

S534

RGL_VAL < 0? ──Y──▶

S536

RGL_VAL := 0

N

S538

RGL_VAL > RGL_MAX? ──Y──▶

S540

RGL_VAL := RGL_MAX

N

S542

SW := RGL_VAL

S544

FCT_RGL := 0

S602

FCT_MAN

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4584528 A

- GB 2192103 A